# EUROPEAN PATENT APPLICATION

(11) **EP 3 895 838 A1**
(43) Date of publication of application: **20.10.2021**
(21) Application number: 19891699.1
(22) Date of filing: 02.12.2019
(51) Int. Cl.: B23K 35/363, B23K 1/00, B23K 35/26, C22C 13/00

(54) **FLUX, SOLDER ALLOY, JOINED BODY, AND METHOD FOR PRODUCING JOINED BODY**

(30) Priority: 03.12.2018 JP 2018226419; 03.12.2018 JP 2018226441
(71) Applicant: Senju Metal Industry Co., Ltd., Tokyo 120-8555 (JP)
(72) Inventor: KAWASAKI, Hiroyoshi, Tokyo 120-8555 (JP); SHIRATORI, Masato, Tokyo 120-8555 (JP)
(74) Representative: Grünecker Patent- und Rechtsanwälte PartG mbB
(86) International application number: PCT/JP2019/046947
(87) International publication number: WO 2020/116372

(57) **Abstract**

An object of the invention is to provide, for instance, a flux which sufficiently enhances the wettability of a solder alloy that does not contain Ag. The above object can be attained by a flux that contains an acid-modified rosin or chlorendic acid and/or chlorendic anhydride and that is for soldering a solder alloy that contains 0.1 to 3.0 wt% of Cu and 0.0040 to 0.0150 wt% of Ge, with a balance being made up of Sn, wherein a content of the acid-modified rosin is 3 to 30 wt% basded on the flux.

## Description

### Technical Field

The present invention relates to a flux, a solder alloy, a joined body and a method for producing the joined body.

### Background Art

Fixing and electrical connection of electronic components in electronic devices, for instance, mounting of electronic components on printed boards, is generally accomplished by soldering, which is most advantageous in terms of cost and reliability.

Various types of solder alloys have been reported as solder alloys that are utilized in soldering, one example of which is a Sn-Ag-Cu-based solder alloy.

Fluxes are used in soldering for the purpose of, for instance, removing an oxide film that is formed on the surface of a substrate, and improving the wettability of a solder alloy (for instance, Patent Documents 1 and 2).

### Citation List

### Patent Document

Patent Document 1: Patent Publication JP-A-2013-126671
Patent Document 2: Japanese Patent No. 6322881

### Summary

### Technical Problem

In a Sn-Ag-Cu-based solder alloy, it is desirable to reduce a content of expensive Ag from the viewpoint of cost; however, Ag has the function of ensuring the wettability of the solder alloy, and hence excluding Ag from the alloy results in poorer wettability. Meanwhile, the wettability of the solder alloy is enhanced through the use of a flux, but it is difficult to sufficiently improve the wettability of a solder alloy that contains no Ag.

It is therefore objects of the present invention to provide a flux that sufficiently enhance the wettability of a solder alloy that does not contain Ag, a solder alloy of which wettability is sufficiently enhanced by the flux, a method for producing a joined body by using the flux and the solder alloy, and a joined body produced by the method.

### Solution to Problem

As a result of diligent research, the inventors found that the wettability of a solder alloy can be sufficiently enhanced by using a combination of a flux containing an acid-modified rosin or chlorendic acid and/or chlorendic anhydride, and a Sn-Cu-Ge-based solder alloy, and therefore perfected the present invention.

The present invention includes the following embodiments.
[1] A flux containing an acid-modified rosin or chlorendic acid and/or chlorendic anhydride, and for soldering a solder alloy that contains 0.1 to 3.0 wt% of Cu and 0.0040 to 0.0150 wt% of Ge, with a balance being made up of Sn,
   wherein a content of the acid-modified rosin is 3 to 30 wt% based on the flux.
[2] The flux of [1], wherein the acid-modified rosin is selected from the group consisting of acrylic acid-modified rosin, acrylic acid-modified hydrogenated rosin, maleic acid-modified rosin and maleic acid-modified hydrogenated rosin.
[3] The flux of [1] or [2], wherein the solder alloy further contains 0.0100 to 0.1000 wt% of Ni.
[4] The flux of any one of [1] to [3], wherein the solder alloy further contains 0.0020 to 0.0150 wt% of As.
[5] The flux of any one of [1] to [4], wherein the soldering is flow soldering.
[6] The flux of any one of [1] to [5], wherein the soldering is pallet soldering.
[7] A solder alloy containing 0.1 to 3.0 wt% of Cu and 0.0040 to 0.0150 wt% of Ge, with a balance being made up of Sn, and for being soldered on a surface of a substrate, the surface being treated with a flux that contains an acid-modified rosin or chlorendic acid and/or chlorendic anhydride,
   wherein a content of the acid-modified rosin is 3 to 30 wt% based on the flux.
[8] The solder alloy of [7], wherein the acid-modified rosin is selected from the group consisting of acrylic acid-modified rosin, acrylic acid-modified hydrogenated rosin, maleic acid-modified rosin and maleic acid-modified hydrogenated rosin.
[9] The solder alloy of [7] or [8], wherein the solder alloy further contains 0.0100 to 0.1000 wt% of Ni.
[10] The solder alloy of any one of [7] to [9], wherein the solder alloy further contains 0.0020 to 0.0150 wt% of As.
[11] The solder alloy of any one of [7] to [10], wherein the soldering is flow soldering.
[12] The solder alloy of any one of [7] to [11], wherein the soldering is pallet soldering.
[13] A method for producing a joined body, the method having a step of soldering a solder alloy that contains 0.1 to 3.0 wt% of Cu and 0.0040 to 0.0150 wt% of Ge, with a balance made up of Sn, to a surface of a substrate, the surface being treated with a flux that contains an acid-modified rosin or chlorendic acid and/or chlorendic anhydride, to form a joined body,
   wherein a content of the acid-modified rosin is 3 to 30 wt% based on the flux.
[14] The production method of [13], wherein the acid-modified rosin is selected from the group consisting of acrylic acid-modified rosin, acrylic acid-modified hydrogenated rosin, maleic acid-modified rosin and maleic acid-modified hydrogenated rosin.
[15] The production method of [13] or [14], wherein the solder alloy further contains 0.0100 to 0.1000 wt% of Ni.
[16] The production method of any one of [13] to [15], wherein the solder alloy further contains 0.0020 to 0.0150 wt% of As.
[17] The production method of any one of [13] to [16], wherein the soldering is flow soldering.
[18] The production method of any one of [13] to [17], wherein the soldering is pallet soldering.
[19] A joined body obtained by the production method of any one of [13] to [17].

### Advantageous Effects of Invention

The present invention succeeds in providing a flux that sufficiently enhances the wettability of a solder alloy that does not contain Ag, a solder alloy of which wettability is sufficiently enhanced by the flux, a method for producing a joined body using the flux and the solder alloy, and a joined body produced in accordance with that method.

### Description of Embodiments

### <Flux and solder alloy>

An embodiment of the present invention relates to a flux that contains an acid-modified rosin or chlorendic acid and/or chlorendic anhydride, for soldering a solder alloy that contains 0.1 to 3.0 wt% of Cu and 0.0040 to 0.0150 wt% of Ge, with the balance made up of Sn, wherein the content of the acid-modified rosin is 3 to 30 wt% based on the flux.

An embodiment of the present invention relates to a solder alloy containing 0.1 to 3.0 wt% of Cu and 0.0040 to 0.0150 wt% of Ge, with the balance made up of Sn, for being soldered on the surface of a substrate, the surface being treated with a flux that contains an acid-modified rosin or chlorendic acid and/or chlorendic anhydride, wherein the content of the acid-modified rosin is 3 to 30 wt% based on the flux.

The wettability of a solder alloy that does not contain Ag can be sufficiently enhanced by using a combination of the flux and the solder alloy according to the present embodiment. Soldering is preferably carried out by flow soldering. Soldering may be carried out by pallet soldering.

The flux according to the present embodiment contains an acid-modified rosin or chlorendic acid and/or chlorendic anhydride. The flux according to the present embodiment may contain both of or just one of the acid-modified rosin, and the chlorendic acid and/or chlorendic anhydride.

Rosin is a non-volatile component contained in pine resins of Pinaceae plants. Examples of rosin include tall rosin, gum rosin and wood rosin. The acid-modified rosin is obtained by subjecting a rosin to an acid treatment. The acid-modified rosin may be hydrogenated. Examples of acid-modified rosin include acrylic acid-modified rosin, acrylic acid-modified hydrogenated rosin, maleic acid-modified rosin, and maleic acid-modified hydrogenated rosin. The acid-modified rosin may be used singly as one type thereof, or may be used in the form of a combination of two or more types. The wettability of the solder alloy can be enhanced by virtue of the fact that the flux contains an acid-modified rosin.

The content of the acid-modified rosin is 3 to 30 wt%, preferably 3 to 20 wt%, and more preferably 4 to 12 wt%, based on the flux. The wettability of the solder alloy can be further enhanced by setting the content of the acid-modified rosin within the above ranges.

The total content of chlorendic acid and chlorendic anhydride is preferably 0.01 to 10.0 wt%, more preferably 0.05 to 5.0 wt%, and yet more preferably 0.1 to 3.0 wt%, based on the flux. The wettability of the solder alloy can be further enhanced by setting the total content of chlorendic acid and chlorendic anhydride within the above range.

The flux may further contain optional components, in addition to the acid-modified rosin or chlorendic acid and/or chlorendic anhydride. Examples of optional components include a solvent, a rosin (excluding acid-modified rosins; likewise hereafter), an activator (excluding chlorendic acid and chlorendic anhydride; likewise hereafter), and a matting agent.

Examples of solvents include water, alcohol-based solvents, glycol ether-based solvents and terpineols.

Examples of alcohol-based solvents include 2-propanol, ethanol, 1,2-butanediol, isobornylcyclohexanol, 2,4-diethyl-1,5-pentanediol, 2,2-dimethyl-1,3-propanediol, 2,5-dimethyl-2,5-hexanediol, 2,5-dimethyl-3-hexyne-2,5-diol, 2,3-dimethyl-2,3-butanediol, 1,1,1-tris(hydroxymethyl)ethane, 2-ethyl-2-hydroxymethyl-1,3-propanediol, 2,2'-oxybis(methylene)bis(2-ethyl-1,3-propanediol), 2,2-bis(hydroxymethyl)-1,3-propanediol, 1,2,6-trihydroxyhexane, bis[2,2,2-tris(hydroxymethyl)ethyl] ether, 1-ethynyl-1-cyclohexanol, 1,4-cyclohexanediol, 1,4-cyclohexanedimethanol, erythritol, threitol, guaiacol glycerol ether, 3,6-dimethyl-4-octyne-3,6-diol and 2,4,7,9-tetramethyl-5-decyne-4,7-diol.

Examples of glycol ether-based solvents include diethylene glycol mono-2-ethylhexyl ether, ethylene glycol monophenyl ether, 2-methylpentane-2,4-diol, diethylene glycol monohexyl ether, diethylene glycol dibutyl ether, triethylene glycol monobutyl ether, hexyldiglycol and tetraethylene glycol dimethyl ether.

Although not particularly limited thereto, alcohol-based solvents are preferred from the viewpoint of volatility. Further, 2-propanol is preferred from the viewpoint of suppressing esterification between the rosin, an organic acid or the like as an activator, and the solvent.

The solvent may be used singly as one type thereof, or may be used in the form of a combination of two or more types.

The content of the solvent is preferably 75 to 94 wt%, more preferably 80 to 92 wt% and yet more preferably 85 to 90 wt%, based on the flux.

Examples of rosins include purified rosin, hydrogenated rosin, disproportionated rosin, polymerized rosin and rosin esters. The wettability of the solder alloy can be enhanced by virtue of the fact that the flux contains a rosin. The rosin may be used singly as one type thereof, or may be used in the form of a combination of two or more types.

The content of the rosin is preferably 1 to 12 wt%, more preferably 2 to 10 wt% and yet more preferably 3 to 8 wt%, based on the flux. The wettability of the solder alloy can be further enhanced by setting the content of the rosin within the above ranges.

Examples of the activator include organic acids, halogen-based activators (for instance, organic halogen compounds and amine hydrohalide salts), amines and organophosphorus compounds (for instance, phosphonic acid esters and phenyl-substituted phosphinic acid). The activator may be used singly as one type thereof, or may be used in the form of a combination of two or more types. The wettability of the solder alloy can be further enhanced by virtue of the fact that the flux contains an activator.

Examples of organic acids include, for instance, adipic acid, azelaic acid, eicosandioic acid, citric acid, glycolic acid, succinic acid, salicylic acid, diglycolic acid, dipicolinic acid, dibutylaniline diglycolic acid, suberic acid, sebacic acid, thioglycolic acid, terephthalic acid, dodecanedioic acid, parahydroxyphenylacetic acid, picolinic acid, phenylsuccinic acid, phthalic acid, fumaric acid, maleic acid, malonic acid, lauric acid, benzoic acid, tartaric acid, trisisocyanurate(2-carboxyethyl), 1,3-cyclohexanedicarboxylic acid, 2,2-bis(hydroxymethyl)propionic acid, 2,2-bis(hydroxymethyl)butanoic acid, 2,3-dihydroxybenzoic acid, 2,4-diethylglutaric acid, 2-quinolinecarboxylic acid, 3-hydroxybenzoic acid, malic acid, p-anisic acid, stearic acid, 12-hydroxystearic acid, oleic acid, linoleic acid, linolenic acid, dimer acids, hydrogenated dimer acids, trimer acids and hydrogenated trimer acids.

Examples of organic halogen compounds include trans-2,3-dibromo-2-butene-1,4-diol, 2,3-dibromo-1,4-butanediol, 2,3-dibromo-1-propanol, 2,3-dichloro-1-propanol, 1,1,2,2-tetrabromoethane, 2,2,2-tribromoethanol, pentabromoethane, carbon tetrabromide, 2,2-bis(bromomethyl)-1,3-propanediol, meso-2,3-dibromosuccinic acid, chloroalkanes, chlorinated fatty acid esters, n-hexadecyltrimethylammonium bromide, triallylisocyanurate hexabromide, 2,2-bis[3,5-dibromo-4-(2,3-dibromopropoxy)phenyl]propane, bis[3,5-dibromo-4-(2,3-dibromopropoxy)phenyl]sulfone, ethylenebispentabromobenzene, 2-chloromethyloxirane and brominated bisphenol A-type epoxy resins.

Examples of amine hydrohalide salts include piperidinium trifluoroborate, stearylamine hydrochloride, diethylaniline hydrochloride, diethanolamine hydrochloride, 2-ethylhexylamine hydrobromide, pyridine hydrobromide, isopropylamine hydrobromide, cyclohexylamine hydrobromide, diethylamine hydrobromide, monoethylamine hydrobromide, 1,3-diphenylguanidine hydrobromide, dimethylamine hydrobromide, dimethylamine hydrochloride, rosin amine hydrobromide, 2-ethylhexylamine hydrochloride, isopropylamine hydrochloride, cyclohexylamine hydrochloride, 2-pipecoline hydrobromide, 1,3-diphenylguanidine hydrochloride, dimethylbenzylamine hydrochloride, hydrazine hydrate hydrobromide, dimethylcyclohexylamine hydrochloride, trinonylamine hydrobromide, diethylaniline hydrobromide, 2-diethylaminoethanol hydrobromide, 2-diethylaminoethanol hydrochloride, ammonium chloride, dialylamine hydrochloride, dialylamine hydrobromide, monoethylamine hydrochloride, monoethylamine hydrobromide, diethylamine hydrochloride, triethylamine hydrobromide, triethylamine hydrochloride, hydrazine monohydrochloride, hydrazine dihydrochloride, hydrazine hydrobromide, hydrazine dihydrobromide, pyridine hydrochloride, aniline hydrobromide, butylamine hydrochloride, hexylamine hydrochloride, n-octylamine hydrochloride, dodecylamine hydrochloride, dimethylcyclohexylamine hydrobromide, ethylenediamine dihydrobromide, rosin amine hydrobromide, 2-phenylimidazole hydrobromide, 4-benzylpyridine hydrobromide, L-glutamate hydrochloride, N-methylmorpholine hydrochloride, betaine hydrochloride, 2-pipecoline hydroiodide, cyclohexylamine hydroiodide, 1,3-diphenylguanidine hydrofluoride, diethylamine hydrofluoride, 2-ethylhexylamine hydrofluoride, cyclohexylamine hydrofluoride, ethylamine hydrofluoride, rosin amine hydrofluoride, piperidine trifluoroborate complex salt, cyclohexylamine tetrafluoroborate and dicyclohexylamine tetrafluoroborate.

Examples of amines include aliphatic amines, aromatic amines, aminoalcohols, azoles, amino acids, guanidine and hydrazides.

Examples of aliphatic amines include piperidine, dimethylamine, ethylamine, 1-aminopropane, isopropylamine, trimethylamine, allylamine, n-butylamine, diethylamine, sec-butylamine, tert-butylamine, N,N-dimethylethylamine, isobutylamine and cyclohexylamine.

Examples of aromatic amines include aniline, N-methylaniline, diphenylamine, N-isopropylaniline and p-isopropylaniline.

Examples of aminoalcohols include 2-aminoethanol, 2-(ethylamino)ethanol, diethanolamine, diisopropanolamine, triethanolamine, N-butyldiethanolamine, triisopropanolamine, N,N-bis(2-hydroxyethyl)-N-cyclohexylamine, N,N,N',N'-tetrakis(2-hydroxypropyl)ethylene diamine and N,N,N',N",N"-pentakis(2-hydroxypropyl)diethylene triamine.

Examples of azoles include imidazole, 3,5-dimethylpyrazole, benzotriazole, 2-methylimidazole, 2-undecylimidazole, 2-heptadecylimidazole, 1,2-dimethylimidazole, 2-ethyl-4-methylimidazole, 2-phenylimidazole, 2-phenyl-4-methylimidazole, 1-benzyl-2-methylimidazole, 1-benzyl-2-phenylimidazole, 1-cyanoethyl-2-methylimidazole, 1-cyanoethyl-2-undecylimidazole, 1-cyanoethyl-2-ethyl-4-methylimidazole, 1-cyanoethyl-2-phenylimidazole, 1-cyanoethyl-2-undecylimidazoliumtrimellitate, 1-cyanoethyl-2-phenylimidazoliumtrimellitate, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, 2,4-diamino-6-[2'-methylimidazolyl-(1')]-ethyl-s-triazine isocyanuric acid adducts, 2-phenylimidazole isocyanuric acid adducts, 2-phenyl-4,5-dihydroxymethylimidazole, 2-phenyl-4-methyl-5-hydroxymethylimidazole, 2,3-dihydro-1H-pyrrolo[1,2-a]benzimidazole, 1-dodecyl-2-methyl-3-benzylimidazolium chloride, 2-methylimidazoline, 2-phenylimidazoline, epoxy-imidazole adducts, 2-methylbenzimidazole, 2-octylbenzimidazole, 2-pentylbenzimidazole, 2-(1-ethylpentyl)benzimidazole, 2-nonylbenzimidazole, 2-(4-thiazolyl)benzimidazole and benzimidazole.

Examples of amino acids include alanine, arginine, asparagine, aspartic acid, cysteine hydrochloride, glutamine, glutamic acid, glycine, histidine, isoleucine, leucine, lysine monohydrochloride, methionine, phenylalanine, proline, serine, threonine, tryptophan, tyrosine, valine, β-alanine, γ-aminobutyric acid, δ-aminovaleric acid, ε-aminohexanoic acid, ε-caprolactam and 7-aminoheptanoic acid.

Examples of phosphonic acid esters include 2-ethylhexyl(2-ethylhexyl)phosphonate, n-octyl(n-octyl)phosphonate, n-decyl(n-decyl)phosphonate and n-butyl(n-butyl)phosphonate.

Examples of phenyl-substituted phosphinic acids include phenylphosphinic acid and diphenylphosphinic acid.

The content of the activator is preferably 0.1 to 12.0 wt%, more preferably 0.3 to 8.0 wt% and yet more preferably 0.5 to 4.0 wt%, based on the flux. The wettability of the solder alloy can be further enhanced by setting the content of the activator within the above ranges.

Examples of the matting agent include palmitic acid. The matting agent may be used singly as one type thereof, or may be used in the form of a combination of two or more types. The luster of a joint portion of the joined body can be eliminated, and the appearance of the portion can be inspected easily, by virtue of the fact that the flux contains a matting agent.

The content of the matting agent is preferably 0.01 to 4.0 wt%, more preferably 0.05 to 3.0 wt% and yet more preferably 0.1 to 2.0 wt%, based on the flux. Inspection of the appearance of the joint portion of the joined body can be further facilitated by setting the content of the matting agent within the above ranges.

The solder alloy according to the present embodiment contains 0.1 to 3.0 wt% of Cu and 0.0040 to 0.0150 wt% of Ge, with the balance made up of Sn. Wettability can be ensured by virtue of the fact that the solder alloy contains Ge. The solder alloy may contain inevitable impurities.

The content of the components contained in the solder alloy can be measured in accordance with the ICP emission spectroscopy method set forth in JIS Z 3910:2017.

The content of Cu is 0.1 to 3.0 wt%, preferably 0.1 to 1.0 wt%, more preferably 0.1 to 0.75 wt%, based on the solder alloy. Diffusion (solder erosion) of a Cu base material can be suppressed by setting the content of Cu to be equal to or higher than the above lower limit. Excessive rises of the liquidus temperature can be suppressed, and thus flow soldering can be carried out at a moderate temperature, by setting the content of Cu to be equal to or lower than the above upper limit.

The content of Ge is 0.0040 to 0.0150 wt%, preferably 0.0040 to 0.0120 wt%, more preferably 0.0050 to 0.0100 wt%, based on the solder alloy. The wettability of the solder alloy can be further enhanced by setting the content of Ge within the above ranges.

The content of Sn is preferably 97.0 to 99.9 wt%, more preferably 98.0 to 99.9 wt%, and yet more preferably 99.0 to 99.9 wt%, based on the solder alloy.

Examples of inevitable impurities include Pb, Sb, Bi, Zn, Fe, Al, Cd, Au and In. The content of Pb, Sb, Bi and In is preferably 0.10 wt% or less based on the solder alloy. The content of Zn and Al is preferably 0.001 wt% or less based on the solder alloy. The content of Fe is preferably 0.02 wt% or less based on the solder alloy. The content of Cd is preferably 0.002 wt% or less based on the solder alloy. The content of Au is preferably 0.05 wt% or less based on the solder alloy. Adverse effects on the wettability of the solder alloy can be avoided by setting the content of the inevitable impurities within the above ranges.

The solder alloy may further contain Ni. The joint strength of the solder alloy and the surface of a substrate can be further increased by virtue of the fact that the solder alloy contains Ni.

The content of Ni is preferably 0.0100 to 0.1000 wt%, more preferably 0.0200 to 0.0900 wt%, and yet more preferably 0.0350 to 0.0750 wt%, based on the solder alloy. The joint strength can be further increased by setting the content of Ni within the above ranges.

The solder alloy may further contain As. Oxidation of the solder alloy and the accompanying yellowing can be prevented when the solder alloy contains As.

The content of As is preferably 0.0020 to 0.0150 wt%, more preferably 0.0040 to 0.0120 wt%, and yet more preferably 0.0080 to 0.0100 wt%, based on the solder alloy. Oxidation of the solder alloy and the accompanying discoloration (yellowing) can be further prevented by setting the content of As within the above ranges.

### <Joined body and production method thereof>

An embodiment of the present invention relates to a method for producing a joined body, the method having a step (hereafter "joining step") of soldering a solder alloy containing 0.1 to 3.0 wt% of Cu and 0.0040 to 0.0150 wt% of Ge, and the balance being Sn, to a surface of a substrate, the surface having been treated with a flux that contains an acid-modified rosin or chlorendic acid and/or chlorendic anhydride, wherein the content of the acid-modified rosin is 3 to 30 wt% based on the flux.

Another embodiment of the present invention relates to a joined body obtained in accordance with the above production method.

Details about the flux and solder alloy used in the production method according to the present embodiment are as set out above in the section <Flux and solder alloy>.

The production method according to the present embodiment may further include a step (hereafter "pretreatment step") of, prior to the joining step, treating the surface of the substrate with a flux that contains an acid-modified rosin or chlorendic acid and/or chlorendic anhydride.

The treatment method in the pretreatment step and the joining method in the joining step are not particularly limited, and methods that are ordinarily carried out in the relevant technical field can be employed. Soldering is preferably carried out by flow soldering. Soldering may be carried out by pallet soldering.

The joined body has a substrate, a solder alloy soldered to the surface of the substrate, and a flux residue. Examples of the substrate include printed wiring boards. Examples of the joined body include a printed circuit board in which electronic components are attached to a printed wiring board.

### Examples

The present invention will be explained next in further detail using examples and comparative examples, but the technical scope of the present invention is not meant to be limited thereto.

Fluxes and solder alloys having the compositions given in the tables below were prepared, and wettability rate was evaluated on the basis of zero cross time in a meniscus measurement. The results are given in Tables 1A to 6E. The evaluation criteria of wettability rate were as follows.
O (good): zero cross time of 5 seconds or less
X (poor): zero cross time beyond 5 seconds

Meniscus conditions were as follows.
- Solid sample: copper plate (width 5 mm × length 25 mm × thickness 0.5 mm; without oxidation treatment or the like)
- Solder bath temperature: 280°C
- Immersion speed: 20 mm/sec
- Immersion depth: 5 mm
- Measurement time: 10 sec
- Flux treatment: immersion of copper plate in flux (immersion depth about 10 mm)

Table 1A sets out results when using various (acid-modified) rosins for a Sn-Cu-Ge-based solder alloy.
Table 2A sets out results when using various (acid-modified) rosins for a Sn-Cu-Ni-Ge-based solder alloy.
Table 3A sets out results when using various (acid-modified) rosins for a Sn-Cu-based solder alloy.
Table 4A sets out results in which the composition of the solder alloy is modified.
Tables 5A and 6A set out results in which the composition of the flux is modified.

**[Table 1A]**

| Flux material | | Ex 1A-1 | Ex 1A-2 | Ex 1A-3 | Ex 1A-4 | Com. Ex 1A-1 | Com. Ex 1A-2 | Com. Ex 1A-3 |
|---|---|---|---|---|---|---|---|---|
| Solvent | 2-propanol | 88.00 | 88.00 | 88.00 | 88.00 | 88.00 | 88.00 | 88.00 |
| | Ethanol | | | | | | | |
| Acid-modified rosin | Acrylic acid-modified hydrogenated rosin | 12.0 | | | | | | |
| | Acrylic acid-modified rosin | | 12.0 | | | | | |
| | Maleic acid-modified hydrogenated rosin | | | 12.0 | 6.0 | 2.0 | | |
| Rosin | Hydrogenated rosin | | | | 6.0 | | 12.0 | |
| | Polymerized rosin | | | | | 10.0 | | 12.0 |
| Organic acid | Succinic acid | | | | | | | |
| | Adipic acid | | | | | | | |
| | Suberic acid | | | | | | | |
| Organic halogen compounds | Chlorendic acid | | | | | | | |
| | Chlorendic anhydride | | | | | | | |
| | Trans-2,3-dibromo-2-butene-1,4-diol | | | | | | | |
| Amine hydrohalide salt | Piperidine trifluoroborate complex salt | | | | | | | |
| | Ethylamine·HBr | | | | | | | |
| Amine | Cyclohexylamine | | | | | | | |
| Phosphonic acid ester | 2-ethylhexyl(2-ethylhexyl)phosphonate | | | | | | | |
| Phenyl-substituted phosphinic acid | Phenylphosphinic acid | | | | | | | |
| Matting agent | Palmitic acid | | | | | | | |
| Total | | 100.00 | 100.00 | 100.00 | 100.00 | 100.00 | 100.00 | 100.00 |
| Solder alloy | | | | | | | | |
| Sn | | Bal. | Bal. | Bal. | Bal. | Bal. | Bal. | Bal. |
| Ag | | | | | | | | |
| Cu | | 0.65 | 0.65 | 0.65 | 0.65 | 0.65 | 0.65 | 0.65 |
| Ni | | | | | | | | |
| Ge | | 0.008 | 0.008 | 0.008 | 0.008 | 0.008 | 0.008 | 0.008 |
| As | | | | | | | | |
| Wettability rate evaluation | | O | O | O | O | X | X | X |

**[Table 2A]**

| Flux material | | Ex. 2A-1 | Ex 2A-2 | Ex. 2A-3 | Com. Ex 2A-1 | Com. Ex 2A-2 |
|---|---|---|---|---|---|---|
| Solvent | 2-propanol | 88.00 | 88.00 | 88.00 | 88.00 | 88.00 |
| | Ethanol | | | | | |
| Acid-modified rosin | Acrylic acid-modified hydrogenated rosin | 12.0 | | | | |
| | Acrylic acid-modified rosin | | 12.0 | | | |
| | Maleic acid-modified hydrogenated rosin | | | 12.0 | | |
| Rosin | Hydrogenated rosin | | | | 12.0 | |
| | Polymerized rosin | | | | | 12.0 |
| Organic acid | Succinic acid | | | | | |
| | Adipic acid | | | | | |
| | Suberic acid | | | | | |
| Organic halogen compounds | Chlorendic acid | | | | | |
| | Chlorendic anhydride | | | | | |
| | Trans-2,3-dibromo-2-butene-1,4-diol | | | | | |
| Amine hydrohalide salt | Piperidine trifluoroborate complex salt | | | | | |
| | Ethylamine·HBr | | | | | |
| Amine | Cyclohexylamine | | | | | |
| Phosphonic acid ester | 2-ethylhexyl(2-ethylhexyl)phosphonate | | | | | |
| Phenyl-substituted phosphinic acid | Phenylphosphinic acid | | | | | |
| Matting agent | Palmitic acid | | | | | |
| Total | | 100.00 | 100.00 | 100.00 | 100.00 | 100.00 |
| Solder alloy | | | | | | |
| Sn | | Bal. | Bal. | Bal. | Bal. | Bal. |
| Ag | | | | | | |
| Cu | | 0.65 | 0.65 | 0.65 | 0.65 | 0.65 |
| Ni | | 0.05 | 0.05 | 0.05 | 0.05 | 0.05 |
| Ge | | 0.008 | 0.008 | 0.008 | 0.008 | 0.008 |
| As | | | | | | |
| Wettability rate evaluation | | O | O | O | X | X |

**[Table 3A]**

| Flux material | | Com. Ex 3A-1 | Com. Ex 3A-2 | Com. Ex 3A-3 | Com. Ex 3A-4 | Com. Ex 3A-5 |
|---|---|---|---|---|---|---|
| Solvent | 2-propanol | 88.00 | 88.00 | 88.00 | 88.00 | 88.00 |
| | Ethanol | | | | | |
| Acid-modified rosin | Acrylic acid-modified hydrogenated rosin | 12.0 | | | | |
| | Acrylic acid-modified rosin | | 12.0 | | | |
| | Maleic acid-modified hydrogenated rosin | | | 12.0 | | |
| Rosin | Hydrogenated rosin | | | | 12.0 | |
| | Polymerized rosin | | | | | 12.0 |
| Organic acid | Succinic acid | | | | | |
| | Adipic acid | | | | | |
| | Suberic acid | | | | | |
| Organic halogen compounds | Chlorendic acid | | | | | |
| | Chlorendic anhydride | | | | | |
| | Trans-2,3-dibromo-2-butene-1,4-diol | | | | | |
| Amine hydrohalide salt | Piperidine trifluoroborate complex salt | | | | | |
| | Ethylamine·HBr | | | | | |
| Amine | Cyclohexylamine | | | | | |
| Phosphonic acid ester | 2-ethylhexyl(2-ethylhexyl)phosphonate | | | | | |
| Phenyl-substituted phosphinic acid | Phenylphosphinic acid | | | | | |
| Matting agent | Palmitic acid | | | | | |
| Total | | 100.00 | 100.00 | 100.00 | 100.00 | 100.00 |
| Solder alloy | | | | | | |
| Sn | | Bal. | Bal. | Bal. | Bal. | Bal. |
| Ag | | | | | | |
| Cu | | 0.65 | 0.65 | 0.65 | 0.65 | 0.65 |
| Ni | | | | | | |
| Ge | | | | | | |
| As | | | | | | |
| Wettability rate evaluation | | X | X | X | X | X |

**[Table 4A]**

| Flux material | | Ex. 4A-1 | Ex 4A-2 | Ex 4A-3 | Ex 4A-4 | Ex 4A-5 | Ex 4A-6 | Com. Ex 4A-1 | Ex 4A-7 | Ex 4A-8 | Com. Ex 4A-2 |
|---|---|---|---|---|---|---|---|---|---|---|---|
| Solvent | 2-propanol | 88.00 | 88.00 | 88.00 | 88.00 | 88.00 | 88.00 | 88.00 | 88.00 | 88.00 | 88.00 |
| | Ethanol | | | | | | | | | | |
| Acid-modified rosin | Acrylic acid-modified hydrogenated rosin | 12.0 | 12.0 | 12.0 | 12.0 | 12.0 | 12.0 | 12.0 | 12.0 | 12.0 | 12.0 |
| | Acrylic acid-modified rosin | | | | | | | | | | |
| | Maleic acid-modified hydrogenated rosin | | | | | | | | | | |
| Rosin | Hydrogenated rosin | | | | | | | | | | |
| | Polymerized rosin | | | | | | | | | | |
| Organic acid | Succinic acid | | | | | | | | | | |
| | Adipic acid | | | | | | | | | | |
| | Suberic acid | | | | | | | | | | |
| Organic halogen compounds | Chlorendic acid | | | | | | | | | | |
| | Chlorendic anhydride | | | | | | | | | | |
| | Trans-2,3-dibromo-2-butene-1,4-diol | | | | | | | | | | |
| Amine hydrohalide salt | Piperidine trifluoroborate complex salt | | | | | | | | | | |
| | Ethylamine·HBr | | | | | | | | | | |
| Amine | Cyclohexylamine | | | | | | | | | | |
| Phosphonic acid ester | 2-ethylhexyl(2-ethylhexyl) ph osphonate | | | | | | | | | | |
| Phenyl-substituted phosphinic acid | Phenylphosphinic acid | | | | | | | | | | |
| Matting agent | Palmitic acid | | | | | | | | | | |
| Total | | 100.00 | 100.00 | 100.00 | 100.00 | 100.00 | 100.00 | 100.00 | 100.00 | 100.00 | 100.00 |
| Solder alloy | | | | | | | | | | | |
| Sn | | Bal. | Bal. | Bal. | Bal. | Bal. | Bal. | Bal. | Bal. | Bal. | Bal. |
| Ag | | | | | | | | | | | |
| Cu | | 0.1 | 0.3 | 0.75 | 1.2 | 0.65 | 0.65 | 0.65 | 0.65 | 0.65 | 0.65 |
| Ni | | 0.05 | 0.05 | 0.05 | 0.05 | 0.01 | 0.1 | 0.05 | 0.05 | 0.05 | 0.05 |
| Ge | | 0.008 | 0.008 | 0.008 | 0.008 | 0.008 | 0.008 | 0.001 | 0.004 | 0.015 | 0.5 |
| As | | | | | | | | | | | |
| Wettability rate evaluation | | O | O | O | O | O | O | X | O | O | X |

**[Table 5A]**

| Flux material | | Ex 5A-1 | Ex 5A-2 | Ex 5A-3 | Ex 5A-4 | Ex 5A-5 | Ex 5A-6 | Ex 5A-7 | Ex 5A-8 | Ex 5A-9 | Ex 5A-10 | Ex 5A-11 | Ex 5A-12 | Ex 5A-13 |
|---|---|---|---|---|---|---|---|---|---|---|---|---|---|---|
| Solvent | 2-propanol | | | | 88.00 | 44.0 | 88.00 | 88.00 | 88.00 | 85.00 | 88.00 | 88.00 | 88.00 | 88.00 |
| | Ethanol | 88.00 | 88.00 | 88.00 | | 44.0 | | | | | | | | |
| Acid-modified rosin | Acrylic acid-modified hydrogenated rosin | 12.0 | | | | 4.0 | 11.5 | 11.5 | 11.5 | | 11.0 | 11.0 | 11.0 | 9.0 |
| | Acrylic acid-modified rosin | | 12.0 | | | 4.0 | | | | | | | | |
| | Maleic acid-modified hydrogenated rosin | | | 12.0 | 6.0 | 4.0 | | | | 4.0 | | | | |
| Rosin | Hydrogenated rosin | | | | 3.0 | | | | | 4.0 | | | | |
| | Polymerized rosin | | | | 3.0 | | | | | 4.0 | | | | |
| Organic acid | Succinic acid | | | | | | 0.5 | | | 1.0 | | | | |
| | Adipic acid | | | | | | | 0.5 | | 1.0 | | | | |
| | Suberic acid | | | | | | | | 0.5 | 1.0 | | | | |
| Organic halogen compounds | Chlorendic acid | | | | | | | | | | 1.0 | | | 1.0 |
| | Chlorendic anhydride | | | | | | | | | | | 1.0 | | 1.0 |
| | Trans-2,3-dibromo-2-butene-1,4-diol | | | | | | | | | | | | 1.0 | 1.0 |
| Amine hydrohalide salt | Piperidine trifluoroborate complex salt | | | | | | | | | | | | | |
| | Ethylamine·HBr | | | | | | | | | | | | | |
| Amine | Cyclohexylamine | | | | | | | | | | | | | |
| Phosphonic acid ester | 2-ethylhexyl(2-ethylhexyl)phospho nate | | | | | | | | | | | | | |
| Phenyl-substituted phosphinic acid | Phenylphosphinic acid | | | | | | | | | | | | | |
| Matting aqent | Palmitic acid | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | | |
| Sn | | Bal | Bal | Bal | Bal | Bal | Bal | Bal | Bal | Bal | Bal | Bal | Bal | Bal |
| Ag | | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 | 0.008 |
| As | | | | | | | | | | | | | | |
| Wettability rate evaluation | | O | O | O | O | O | O | O | O | O | O | O | O | O |

**[Table 6A]**

| Flux material | | Ex 6A-1 | Ex 6A-2 | Ex 6A-3 | Ex 6A-4 | Ex 6A-5 | Ex 6A-6 | Ex 6A-7 | Ex 6A-8 | Ex 6A-9 | Ex 6A-10 |
|---|---|---|---|---|---|---|---|---|---|---|---|
| Solvent | 2-propanol | 88.00 | 88.00 | 88.00 | 87.00 | 88.00 | 88.00 | 88.00 | 88.00 | 85.60 | |
| | Ethanol | | | | | | | | | | 85.60 |
| Acid-modified rosin | Acrylic acid-modified hydrogenated rosin | 11.0 | 11.0 | 11.0 | 9.0 | 11.0 | 11.0 | 10.0 | 10.0 | 3.0 | 3.0 |
| | Acrylic acid-modified rosin | | | | | | | | | 3.0 | 3.0 |
| | Maleic acid-modified hydrogenated rosin | | | | | | | | | 3.0 | 3.0 |
| Rosin | Hydrogenated rosin | | | | | | | | | 1.5 | 1.5 |
| | Polymerized rosin | | | | | | | | | 1.5 | 1.5 |
| Organic acid | Succinic acid | | | | 3.0 | | | | | 0.5 | 0.5 |
| | Adipic acid | | | | | | | | | 0.5 | 0.5 |
| | Suberic acid | | | | | | | | | 0.5 | 0.5 |
| Organic halogen compounds | Chlorendic acid | | | | | | | | | 0.1 | 0.1 |
| | Chlorendic anhydride | | | | | | | | | 0.1 | 0.1 |
| | Trans-2,3-dibromo-2-butene-1,4-diol | | | | | | | | | 0.1 | 0.1 |
| Amine hydrohalide salt | Piperidine trifluoroborate complex salt | 1.0 | | 0.5 | | | | | | 0.1 | 0.1 |
| | Ethylamine·HBr | | 1.0 | 0.5 | | | | | | 0.1 | 0.1 |
| Amine | Cyclohexylamine | | | | 1.0 | | | | | 0.1 | 0.1 |
| Phosphonic acid ester | 2-ethylhexyl(2-ethylhexyl)phospho nate | | | | | 1.0 | | 1.0 | | 0.1 | 0.1 |
| Phenyl-substitute d phosphinic acid | Phenylphosphinic acid | | | | | | 1.0 | 1.0 | | 0.1 | 0.1 |
| Matting agent | Palmitic acid | | | | | | | | 2.0 | 0.1 | 0.1 |
| Total | | 100.00 | 100.00 | 100.00 | 100.00 | 100.00 | 100.00 | 100.00 | 100.00 | 100.00 | 100.00 |
| Solder alloy | | | | | | | | | | | |
| Sn | | Bal. | Bal. | Bal. | Bal. | Bal. | Bal. | Bal. | Bal. | Bal. | Bal. |
| Ag | | | | | | | | | | | |
| Cu | | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 |
| As | | | | | | | | | | | |
| Wettability rate evaluation | | O | O | O | O | O | O | O | O | O | O |

Table 1B to Table 6B respectively correspond to Table 1A to Table 6A, except that the solder alloy further contains 0.0020 wt% of As.

**[Table 1B]**

| Flux material | | Ex 1B-1 | Ex 1B-2 | Ex 1B-3 | Ex 1B-4 | Com. Ex 1B-1 | Com. Ex 1B-2 | Com. Ex 1B-3 |
|---|---|---|---|---|---|---|---|---|
| Solvent | 2-propanol | 88.00 | 88.00 | 88.00 | 88.00 | 88.00 | 88.00 | 88.00 |
| | Ethanol | | | | | | | |
| Acid-modified rosin | Acrylic acid-modified hydrogenated rosin | 12.0 | | | | | | |
| | Acrylic acid-modified rosin | | 12.0 | | | | | |
| | Maleic acid-modified hydrogenated rosin | | | 12.0 | 6.0 | 2.0 | | |
| Rosin | Hydrogenated rosin | | | | 6.0 | | 12.0 | |
| | Polymerized rosin | | | | | 10.0 | | 12.0 |
| Organic acid | Succinic acid | | | | | | | |
| | Adipic acid | | | | | | | |
| | Suberic acid | | | | | | | |
| Organic halogen compounds | Chlorendic acid | | | | | | | |
| | Chlorendic anhydride | | | | | | | |
| | Trans-2,3-dibromo-2-butene-1,4-diol | | | | | | | |
| Amine hydrohalide salt | Piperidine trifluoroborate complex salt | | | | | | | |
| | Ethylamine·HBr | | | | | | | |
| Amine | Cyclohexylamine | | | | | | | |
| Phosphonic acid ester | 2-ethylhexyl(2-ethylhexyl)phosphonate | | | | | | | |
| Phenyl-substituted phosphinic acid | Phenylphosphinic acid | | | | | | | |
| Matting aqent | Palmitic acid | | | | | | | |
| Total | | 100.00 | 100.00 | 100.00 | 100.00 | 100.00 | 100.00 | 100.00 |
| Solder alloy | | | | | | | | |
| Sn | | Bal. | Bal. | Bal. | Bal. | Bal. | Bal. | Bal. |
| Ag | | | | | | | | |
| Cu | | 0.65 | 0.65 | 0.65 | 0.65 | 0.65 | 0.65 | 0.65 |
| Ni | | | | | | | | |
| Ge | | 0.008 | 0.008 | 0.008 | 0.008 | 0.008 | 0.008 | 0.008 |
| As | | 0.0020 | 0.0020 | 0.0020 | 0.0020 | 0.0020 | 0.0020 | 0.0020 |
| Wettability rate evaluation | | O | O | O | O | X | X | X |

**[Table 2B]**

| Flux material | | Ex. 2B-1 | Ex. 2B-2 | Ex. 2B-3 | Com. Ex 2B-1 | Com. Ex 2B-2 |
|---|---|---|---|---|---|---|
| Solvent | 2-propanol | 88.00 | 88.00 | 88.00 | 88.00 | 88.00 |
| | Ethanol | | | | | |
| Acid-modified rosin | Acrylic acid-modified hydrogenated rosin | 12.0 | | | | |
| | Acrylic acid-modified rosin | | 12.0 | | | |
| | Maleic acid-modified hydrogenated rosin | | | 12.0 | | |
| Rosin | Hydrogenated rosin | | | | 12.0 | |
| | Polymerized rosin | | | | | 12.0 |
| Organic acid | Succinic acid | | | | | |
| | Adipic acid | | | | | |
| | Suberic acid | | | | | |
| Organic halogen compounds | Chlorendic acid | | | | | |
| | Chlorendic anhydride | | | | | |
| | Trans-2,3-dibromo-2-butene-1,4-diol | | | | | |
| Amine hydrohalide salt | Piperidine trifluoroborate complex salt | | | | | |
| | Ethylamine·HBr | | | | | |
| Amine | Cyclohexylamine | | | | | |
| Phosphonic acid ester | 2-ethylhexyl(2-ethylhexyl)phosphonate | | | | | |
| Phenyl-substituted phosphinic acid | Phenylphosphinic acid | | | | | |
| Matting agent | Palmitic acid | | | | | |
| Total | | 100.00 | 100.00 | 100.00 | 100.00 | 100.00 |
| Solder alloy | | | | | | |
| Sn | | Bal. | Bal. | Bal. | Bal. | Bal. |
| Ag | | | | | | |
| Cu | | 0.65 | 0.65 | 0.65 | 0.65 | 0.65 |
| Ni | | 0.05 | 0.05 | 0.05 | 0.05 | 0.05 |
| Ge | | 0.008 | 0.008 | 0.008 | 0.008 | 0.008 |
| As | | 0.0020 | 0.0020 | 0.0020 | 0.0020 | 0.0020 |
| Wettability rate evaluation | | O | O | O | X | X |

**[Table 3B]**

| Flux material | | Com. Ex. 3B-1 | Com. Ex. 3B-2 | Com. Ex. 3B-3 | Com. Ex. 3B-4 | Com. Ex. 3B-5 |
|---|---|---|---|---|---|---|
| Solvent | 2-propanol | 88.00 | 88.00 | 88.00 | 88.00 | 88.00 |
| | Ethanol | | | | | |
| Acid-modified rosin | Acrylic acid-modified hydrogenated rosin | 12.0 | | | | |
| | Acrylic acid-modified rosin | | 12.0 | | | |
| | Maleic acid-modified hydrogenated rosin | | | 12.0 | | |
| Rosin | Hydrogenated rosin | | | | 12.0 | |
| | Polymerized rosin | | | | | 12.0 |
| Organic acid | Succinic acid | | | | | |
| | Adipic acid | | | | | |
| | Suberic acid | | | | | |
| Organic halogen compounds | Chlorendic acid | | | | | |
| | Chlorendic anhydride | | | | | |
| | Trans-2,3-dibromo-2-butene-1,4-diol | | | | | |
| Amine hydrohalide salt | Piperidine trifluoroborate complex salt | | | | | |
| | Ethylamine·HBr | | | | | |
| Amine | Cyclohexylamine | | | | | |
| Phosphonic acid ester | 2-ethylhexyl(2-ethylhexyl)phosphonate | | | | | |
| Phenyl-substituted phosphinic acid | Phenylphosphinic acid | | | | | |
| Matting agent | Palmitic acid | | | | | |
| Total | | 100.00 | 100.00 | 100.00 | 100.00 | 100.00 |
| Solder alloy | | | | | | |
| Sn | | Bal. | Bal. | Bal. | Bal. | Bal. |
| Ag | | | | | | |
| Cu | | 0.65 | 0.65 | 0.65 | 0.65 | 0.65 |
| Ni | | | | | | |
| Ge | | | | | | |
| As | | 0.0020 | 0.0020 | 0.0020 | 0.0020 | 0.0020 |
| Wettability rate evaluation | | X | X | X | X | X |

**[Table 4B]**

| Flux material | | Ex 4B-1 | Ex. 4B-2 | Ex. 4B-3 | Ex. 4B-4 | Ex 4B-5 | Ex. 4B-6 |
|---|---|---|---|---|---|---|---|
| Solvent | 2-propanol | 88.00 | 88.00 | 88.00 | 88.00 | 88.00 | 88.00 |
| | Ethanol | | | | | | |
| Acid-modified rosin | Acrylic acid-modified hydrogenated rosin | 12.0 | 12.0 | 12.0 | 12.0 | 12.0 | 12.0 |
| | Acrylic acid-modified rosin | | | | | | |
| | Maleic acid-modified hydrogenated rosin | | | | | | |
| Rosin | Hydrogenated rosin | | | | | | |
| | Polymerized rosin | | | | | | |
| Organic acid | Succinic acid | | | | | | |
| | Adipic acid | | | | | | |
| | Suberic acid | | | | | | |
| Organic halogen compounds | Chlorendic acid | | | | | | |
| | Chlorendic anhydride | | | | | | |
| | Trans-2,3-dibromo-2-butene-1,4-diol | | | | | | |
| Amine hydrohalide salt | Piperidine trifluoroborate complex salt | | | | | | |
| | Ethylamine·HBr | | | | | | |
| Amine | Cyclohexylamine | | | | | | |
| Phosphonic acid ester | 2-ethylhexyl(2-ethylhexyl) ph osphonate | | | | | | |
| Phenyl-substituted phosphinic acid | Phenylphosphinic acid | | | | | | |
| Matting agent | Palmitic acid | | | | | | |
| Total | | 100.00 | 100.00 | 100.00 | 100.00 | 100.00 | 100.00 |
| Solder alloy | | | | | | | |
| Sn | | Bal. | Bal. | Bal. | Bal. | Bal. | Bal. |
| Ag | | | | | | | |
| Cu | | 0.3 | 0.75 | 0.65 | 0.65 | 0.65 | 0.65 |
| Ni | | 0.05 | 0.05 | 0.01 | 0.1 | 0.05 | 0.05 |
| Ge | | 0.008 | 0.008 | 0.008 | 0.008 | 0.004 | 0.015 |
| As | | 0.0020 | 0.0020 | 0.0020 | 0.0020 | 0.0020 | 0.0020 |
| Wettability rate evaluation | | O | O | O | O | O | O |

**[Table 5B]**

| Flux material | | Ex 5B-1 | Ex 5B-2 | Ex 5B-3 | Ex 5B-4 | Ex 5B-5 | Ex 5B-6 | Ex 5B-7 | Ex 5B-8 | Ex 5B-9 | Ex 5B-10 | Ex 5B-11 | Ex 5B-12 | Ex 5B-13 |
|---|---|---|---|---|---|---|---|---|---|---|---|---|---|---|
| Solvent | 2-propanol | | | | 88.00 | 44.0 | 88.00 | 88.00 | 88.00 | 85.00 | 88.00 | 88.00 | 88.00 | 88.00 |
| | Ethanol | 88.00 | 88.00 | 88.00 | | 44.0 | | | | | | | | |
| Acid-modified rosin | Acrylic acid-modified hydrogenated rosin | 12. 0 | | | | 4.0 | 11.5 | 11.5 | 11.5 | | 11.0 | 11.0 | 11.0 | 9.0 |
| | Acrylic acid-modified rosin | | 12. 0 | | | 4.0 | | | | | | | | |
| | Maleic acid-modified hydrogenated rosin | | | 12. 0 | 6.0 | 4.0 | | | | 4.0 | | | | |
| Rosin | Hydrogenated rosin | | | | 3.0 | | | | | 4.0 | | | | |
| | Polymerized rosin | | | | 3.0 | | | | | 4.0 | | | | |
| Organic acid | Succinic acid | | | | | | 0.5 | | | 1.0 | | | | |
| | Adipic acid | | | | | | | 0.5 | | 1.0 | | | | |
| | Suberic acid | | | | | | | | 0.5 | 1.0 | | | | |
| Organic halogen compounds | Chlorendic acid | | | | | | | | | | 1.0 | | | 1.0 |
| | Chlorendic anhydride | | | | | | | | | | | 1.0 | | 1.0 |
| | Trans-2,3-dibromo-2-butene-1,4-diol | | | | | | | | | | | | 1.0 | 1.0 |
| Amine hydrohalide salt | Piperidine trifluoroborate complex salt | | | | | | | | | | | | | |
| | Ethylamine·HBr | | | | | | | | | | | | | |
| Amine | Cyclohexylamine | | | | | | | | | | | | | |
| Phosphonic acid ester | 2-ethylhexyl(2-ethylhexyl)phosphonate | | | | | | | | | | | | | |
| Phenyl-substituted phosphinic acid | Phenylphosphinic acid | | | | | | | | | | | | | |
| Matting agent | Palmitic acid | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | | |
| Sn | | Bal | Bal | Bal | Bal | Bal | Bal | Bal | Bal | Bal | Bal | Bal | Bal | Bal |
| Ag | | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 | 0.008 |
| As | | 0.0020 | 0.0020 | 0.0020 | 0.0020 | 0.0020 | 0.0020 | 0.0020 | 0.0020 | 0.0020 | 0.0020 | 0.0020 | 0.0020 | 0.0020 |
| Wettability rate evaluation | | O | O | O | O | O | O | O | O | O | O | O | O | O |

**[Table 6B]**

| Flux material | | Ex 6B-1 | Ex 6B-2 | Ex 6B-3 | Ex 6B-4 | Ex 6B-5 | Ex 6B-6 | Ex 6B-7 | Ex 6B-8 | Ex 6B-9 | Ex 6B-10 |
|---|---|---|---|---|---|---|---|---|---|---|---|
| Solvent | 2-propanol | 88.00 | 88.00 | 88.00 | 87.00 | 88.00 | 88.00 | 88.00 | 88.00 | 85.60 | |
| | Ethanol | | | | | | | | | | 85.60 |
| Acid-modified rosin | Acrylic acid-modified hydrogenated rosin | 11.0 | 11.0 | 11.0 | 9.0 | 11.0 | 11.0 | 10.0 | 10.0 | 3.0 | 3.0 |
| | Acrylic acid-modified rosin | | | | | | | | | 3.0 | 3.0 |
| | Maleic acid-modified hydrogenated rosin | | | | | | | | | 3.0 | 3.0 |
| Rosin | Hydrogenated rosin | | | | | | | | | 1.5 | 1.5 |
| | Polymerized rosin | | | | | | | | | 1.5 | 1.5 |
| Organic acid | Succinic acid | | | | 3.0 | | | | | 0.5 | 0.5 |
| | Adipic acid | | | | | | | | | 0.5 | 0.5 |
| | Suberic acid | | | | | | | | | 0.5 | 0.5 |
| Organic halogen compounds | Chlorendic acid | | | | | | | | | 0.1 | 0.1 |
| | Chlorendic anhydride | | | | | | | | | 0.1 | 0.1 |
| | Trans-2,3-dibromo-2-butene-1,4-diol | | | | | | | | | 0.1 | 0.1 |
| Amine hydrohalide salt | Piperidine trifluoroborate complex salt | 1.0 | | 0.5 | | | | | | 0.1 | 0.1 |
| | Ethylamine·HBr | | 1.0 | 0.5 | | | | | | 0.1 | 0.1 |
| Amine | Cyclohexylamine | | | | 1.0 | | | | | 0.1 | 0.1 |
| Phosphonic acid ester | 2-ethylhexyl(2-ethylhexyl)phosphonate | | | | | 1.0 | | 1.0 | | 0.1 | 0.1 |
| Phenyl-substituted phosphinic acid | Phenylphosphinic acid | | | | | | 1.0 | 1.0 | | 0.1 | 0.1 |
| Matting agent | Palmitic acid | | | | | | | | 2.0 | 0.1 | 0.1 |
| Total | | 100.00 | 100.00 | 100.00 | 100.00 | 100.00 | 100.00 | 100.00 | 100.00 | 100.00 | 100.00 |
| Solder alloy | | | | | | | | | | | |
| Sn | | Bal. | Bal. | Bal. | Bal. | Bal. | Bal. | Bal. | Bal. | Bal. | Bal. |
| Ag | | | | | | | | | | | |
| Cu | | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 |
| As | | 0.0020 | 0.0020 | 0.0020 | 0.0020 | 0.0020 | 0.0020 | 0.0020 | 0.0020 | 0.0020 | 0.0020 |
| Wettability rate evaluation | | O | O | O | O | O | O | O | O | O | O |

Table 1C to Table 6C respectively correspond to Table 1A to Table 6A, except that the solder alloy further contains 0.0050 wt% of As.

**[Table 1C]**

| Flux material | | Ex 1C-1 | Ex 1C-2 | Ex 1C-3 | Ex 1C-4 | Com. Ex. 1C-1 | Com. Ex. 1C-2 | Com. Ex. 1C-3 |
|---|---|---|---|---|---|---|---|---|
| Solvent | 2-propanol | 88.00 | 88.00 | 88.00 | 88.00 | 88.00 | 88.00 | 88.00 |
| | Ethanol | | | | | | | |
| Acid-modified rosin | Acrylic acid-modified hydrogenated rosin | 12.0 | | | | | | |
| | Acrylic acid-modified rosin | | 12.0 | | | | | |
| | Maleic acid-modified hydrogenated rosin | | | 12.0 | 6.0 | 2.0 | | |
| Rosin | Hydrogenated rosin | | | | 6.0 | | 12.0 | |
| | Polymerized rosin | | | | | 10.0 | | 12.0 |
| Organic acid | Succinic acid | | | | | | | |
| | Adipic acid | | | | | | | |
| | Suberic acid | | | | | | | |
| Organic halogen compounds | Chlorendic acid | | | | | | | |
| | Chlorendic anhydride | | | | | | | |
| | Trans-2,3-dibromo-2-butene-1,4-diol | | | | | | | |
| Amine hydrohalide salt | Piperidine trifluoroborate complex salt | | | | | | | |
| | Ethylamine·HBr | | | | | | | |
| Amine | Cyclohexylamine | | | | | | | |
| Phosphonic acid ester | 2-ethylhexyl(2-ethylhexyl)phosphonate | | | | | | | |
| Phenyl-substituted phosphinic acid | Phenylphosphinic acid | | | | | | | |
| Matting agent | Palmitic acid | | | | | | | |
| Total | | 100.00 | 100.00 | 100.00 | 100.00 | 100.00 | 100.00 | 100.00 |
| Solder alloy | | | | | | | | |
| Sn | | Bal. | Bal. | Bal. | Bal. | Bal. | Bal. | Bal. |
| Ag | | | | | | | | |
| Cu | | 0.65 | 0.65 | 0.65 | 0.65 | 0.65 | 0.65 | 0.65 |
| Ni | | | | | | | | |
| Ge | | 0.008 | 0.008 | 0.008 | 0.008 | 0.008 | 0.008 | 0.008 |
| As | | 0.0050 | 0.0050 | 0.0050 | 0.0050 | 0.0050 | 0.0050 | 0.0050 |
| Wettability rate evaluation | | O | O | O | O | X | X | X |

**[Table 2C]**

| Flux material | | Ex 2C-1 | Ex 2C-2 | Ex. 2C-3 | Com. Ex. 2C-1 | Com. Ex. 2C-2 |
|---|---|---|---|---|---|---|
| Solvent | 2-propanol | 88.00 | 88.00 | 88.00 | 88.00 | 88.00 |
| | Ethanol | | | | | |
| Acid-modified rosin | Acrylic acid-modified hydrogenated rosin | 12.0 | | | | |
| | Acrylic acid-modified rosin | | 12.0 | | | |
| | Maleic acid-modified hydrogenated rosin | | | 12.0 | | |
| Rosin | Hydrogenated rosin | | | | 12.0 | |
| | Polymerized rosin | | | | | 12.0 |
| Organic acid | Succinic acid | | | | | |
| | Adipic acid | | | | | |
| | Suberic acid | | | | | |
| Organic halogen compounds | Chlorendic acid | | | | | |
| | Chlorendic anhydride | | | | | |
| | Trans-2,3-dibromo-2-butene-1,4-diol | | | | | |
| Amine hydrohalide salt | Piperidine trifluoroborate complex salt | | | | | |
| | Ethylamine·HBr | | | | | |
| Amine | Cyclohexylamine | | | | | |
| Phosphonic acid ester | 2-ethylhexyl(2-ethylhexyl)phosphonate | | | | | |
| Phenyl-substituted phosphinic acid | Phenylphosphinic acid | | | | | |
| Matting agent | Palmitic acid | | | | | |
| Total | | 100.00 | 100.00 | 100.00 | 100.00 | 100.00 |
| Solder alloy | | | | | | |
| Sn | | Bal. | Bal. | Bal. | Bal. | Bal. |
| Ag | | | | | | |
| Cu | | 0.65 | 0.65 | 0.65 | 0.65 | 0.65 |
| Ni | | 0.05 | 0.05 | 0.05 | 0.05 | 0.05 |
| Ge | | 0.008 | 0.008 | 0.008 | 0.008 | 0.008 |
| As | | 0.0050 | 0.0050 | 0.0050 | 0.0050 | 0.0050 |
| Wettability rate evaluation | | O | O | O | X | X |

**[Table 3C]**

| Flux material | | Com. Ex. 3C-1 | Com. Ex. 3C-2 | Com. Ex. 3C-3 | Com. Ex. 3C-4 | Com. Ex. 3C-5 |
|---|---|---|---|---|---|---|
| Solvent | 2-propanol | 88.00 | 88.00 | 88.00 | 88.00 | 88.00 |
| | Ethanol | | | | | |
| Acid-modified rosin | Acrylic acid-modified hydrogenated rosin | 12.0 | | | | |
| | Acrylic acid-modified rosin | | 12.0 | | | |
| | Maleic acid-modified hydrogenated rosin | | | 12.0 | | |
| Rosin | Hydrogenated rosin | | | | 12.0 | |
| | Polymerized rosin | | | | | 12.0 |
| Organic acid | Succinic acid | | | | | |
| | Adipic acid | | | | | |
| | Suberic acid | | | | | |
| Organic halogen compounds | Chlorendic acid | | | | | |
| | Chlorendic anhydride | | | | | |
| | Trans-2,3-dibromo-2-butene-1,4-diol | | | | | |
| Amine hydrohalide salt | Piperidine trifluoroborate complex salt | | | | | |
| | Ethylamine·HBr | | | | | |
| Amine | Cyclohexylamine | | | | | |
| Phosphonic acid ester | 2-ethylhexyl(2-ethylhexyl)phosphonate | | | | | |
| Phenyl-substituted phosphinic acid | Phenylphosphinic acid | | | | | |
| Matting agent | Palmitic acid | | | | | |
| Total | | 100.00 | 100.00 | 100.00 | 100.00 | 100.00 |
| Solder alloy | | | | | | |
| Sn | | Bal. | Bal. | Bal. | Bal. | Bal. |
| Ag | | | | | | |
| Cu | | 0.65 | 0.65 | 0.65 | 0.65 | 0.65 |
| Ni | | | | | | |
| Ge | | | | | | |
| As | | 0.0050 | 0.0050 | 0.0050 | 0.0050 | 0.0050 |
| Wettability rate evaluation | | X | X | X | X | X |

**[Table 4C]**

| Flux material | | Ex. 4C-1 | Ex 4C-2 | Ex 4C-3 | Ex 4C-4 | Ex 4C-5 | Ex 4C-6 |
|---|---|---|---|---|---|---|---|
| Solvent | 2-propanol | 88.00 | 88.00 | 88.00 | 88.00 | 88.00 | 88.00 |
| | Ethanol | | | | | | |
| Acid-modified rosin | Acrylic acid-modified hydrogenated rosin | 12.0 | 12.0 | 12.0 | 12.0 | 12.0 | 12.0 |
| | Acrylic acid-modified rosin | | | | | | |
| | Maleic acid-modified hydrogenated rosin | | | | | | |
| Rosin | Hydrogenated rosin | | | | | | |
| | Polymerized rosin | | | | | | |
| Organic acid | Succinic acid | | | | | | |
| | Adipic acid | | | | | | |
| | Suberic acid | | | | | | |
| Organic halogen compounds | Chlorendic acid | | | | | | |
| | Chlorendic anhydride | | | | | | |
| | Trans-2,3-dibromo-2-butene-1,4-diol | | | | | | |
| Amine hydrohalide salt | Piperidine trifluoroborate complex salt | | | | | | |
| | Ethylamine·HBr | | | | | | |
| Amine | Cyclohexylamine | | | | | | |
| Phosphonic acid ester | 2-ethylhexyl(2-ethylhexyl)phosphonate | | | | | | |
| Phenyl-substituted phosphinic acid | Phenylphosphinic acid | | | | | | |
| Matting agent | Palmitic acid | | | | | | |
| Total | | 100.00 | 100.00 | 100.00 | 100.00 | 100.00 | 100.00 |
| Solder alloy | | | | | | | |
| Sn | | Bal. | Bal. | Bal. | Bal. | Bal. | Bal. |
| Ag | | | | | | | |
| Cu | | 0.3 | 0.75 | 0.65 | 0.65 | 0.65 | 0.65 |
| Ni | | 0.05 | 0.05 | 0.01 | 0.1 | 0.05 | 0.05 |
| Ge | | 0.008 | 0.008 | 0.008 | 0.008 | 0.004 | 0.015 |
| As | | 0.0050 | 0.0050 | 0.0050 | 0.0050 | 0.0050 | 0.0050 |
| Wettability rate evaluation | | O | O | O | O | O | O |

**[Table 5C]**

| Flux material | | Ex. 5C-1 | Ex 5C-2 | Ex 5C-3 | Ex 5C-4 | Ex 5C-5 | Ex 5C-6 | Ex 5C-7 | Ex 5C-8 | Ex 5C-9 | Ex 5C-10 | Ex 5C-11 | Ex 5C-12 | Ex 5C-13 |
|---|---|---|---|---|---|---|---|---|---|---|---|---|---|---|
| Solvent | 2-propanol | | | | 88.00 | 44.0 | 88.00 | 88.00 | 88.00 | 85.00 | 88.00 | 88.00 | 88.00 | 88.00 |
| | Ethanol | 88.00 | 88.00 | 88.00 | | 44.0 | | | | | | | | |
| Acid-modified rosin | Acrylic acid-modified hydrogenated rosin | 12.0 | | | | 4.0 | 11.5 | 11.5 | 11.5 | | 11.0 | 11.0 | 11.0 | 9.0 |
| | Acrylic acid-modified rosin | | 12.0 | | | 4.0 | | | | | | | | |
| | Maleic acid-modified hydrogenated rosin | | | 12.0 | 6.0 | 4.0 | | | | 4.0 | | | | |
| Rosin | Hydrogenated rosin | | | | 3.0 | | | | | 4.0 | | | | |
| | Polymerized rosin | | | | 3.0 | | | | | 4.0 | | | | |
| Organic acid | Succinic acid | | | | | | 0.5 | | | 1.0 | | | | |
| | Adipic acid | | | | | | | 0.5 | | 1.0 | | | | |
| | Suberic acid | | | | | | | | 0.5 | 1.0 | | | | |
| Organic halogen compou nds | Chlorendic acid | | | | | | | | | | 1.0 | | | 1.0 |
| | Chlorendic anhydride | | | | | | | | | | | 1.0 | | 1.0 |
| | Trans-2,3-dibromo-2-butene-1,4-diol | | | | | | | | | | | | 1.0 | 1.0 |
| Amine hydrohal ide salt | Piperidine trifluoroborate complex salt | | | | | | | | | | | | | |
| | Ethylamine·HBr | | | | | | | | | | | | | |
| Amine | Cyclohexylamine | | | | | | | | | | | | | |
| Phospho nic acid ester | 2-ethylhexyl(2-ethylhexyl)phosp honate | | | | | | | | | | | | | |
| Phenyl-substitut ed phosphi nic acid | Phenylphosphinic acid | | | | | | | | | | | | | |
| Matting agent | Palmitic acid | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | | |
| Sn | | Bal. | Bal. | Bal. | Bal. | Bal. | Bal. | Bal. | Bal. | Bal. | Bal. | Bal. | Bal. | Bal. |
| Ag | | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 | 0.008 |
| As | | 0.0050 | 0.0050 | 0.0050 | 0.0050 | 0.0050 | 0.0050 | 0.0050 | 0.0050 | 0.0050 | 0.0050 | 0.0050 | 0.0050 | 0.0050 |
| Wettability rate evaluation | | ○ | ○ | ○ | ○ | ○ | ○ | ○ | ○ | ○ | ○ | ○ | ○ | ○ |

**[Table 6C]**

| Flux material | | Ex. 6C-1 | Ex 6C-2 | Ex 6C-3 | Ex 6C-4 | Ex 6C-5 | Ex 6C-6 | Ex 6C-7 | Ex 6C-8 | Ex 6C-9 | Ex 6C-10 |
|---|---|---|---|---|---|---|---|---|---|---|---|
| Solvent | 2-propanol | 88.00 | 88.00 | 88.00 | 87.00 | 88.00 | 88.00 | 88.00 | 88.00 | 85.60 | |
| | Ethanol | | | | | | | | | | 85.60 |
| Acid-modified rosin | Acrylic acid-modified hydrogenated rosin | 11.0 | 11.0 | 11.0 | 9.0 | 11.0 | 11.0 | 10.0 | 10.0 | 3.0 | 3.0 |
| | Acrylic acid-modified rosin | | | | | | | | | 3.0 | 3.0 |
| | Maleic acid-modified hydrogenated rosin | | | | | | | | | 3.0 | 3.0 |
| Rosin | Hydrogenated rosin | | | | | | | | | 1.5 | 1.5 |
| | Polymerized rosin | | | | | | | | | 1.5 | 1.5 |
| Organic acid | Succinic acid | | | | 3.0 | | | | | 0.5 | 0.5 |
| | Adipic acid | | | | | | | | | 0.5 | 0.5 |
| | Suberic acid | | | | | | | | | 0.5 | 0.5 |
| Organic halogen compounds | Chlorendic acid | | | | | | | | | 0.1 | 0.1 |
| | Chlorendic anhydride | | | | | | | | | 0.1 | 0.1 |
| | Trans-2,3-dibromo-2-butene-1,4-diol | | | | | | | | | 0.1 | 0.1 |
| Amine hydrohalide salt | Piperidine trifluoroborate complex salt | 1.0 | | 0.5 | | | | | | 0.1 | 0.1 |
| | Ethylamine·HBr | | 1.0 | 0.5 | | | | | | 0.1 | 0.1 |
| Amine | Cyclohexylamine | | | | 1.0 | | | | | 0.1 | 0.1 |
| Phosphonic acid ester | 2-ethylhexyl(2-ethylhexyl)phosphonate | | | | | 1.0 | | 1.0 | | 0.1 | 0.1 |
| Phenyl-substituted phosphinic acid | Phenylphosphinic acid | | | | | | 1.0 | 1.0 | | 0.1 | 0.1 |
| Matting agent | Palmitic acid | | | | | | | | 2.0 | 0.1 | 0.1 |
| Total | | 100.00 | 100.00 | 100.00 | 100.00 | 100.00 | 100.00 | 100.00 | 100.00 | 100.00 | 100.00 |
| Solder alloy | | | | | | | | | | | |
| Sn | | Bal. | Bal. | Bal. | Bal. | Bal. | Bal. | Bal. | Bal. | Bal. | Bal. |
| Ag | | | | | | | | | | | |
| Cu | | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 |
| As | | 0.0050 | 0.0050 | 0.0050 | 0.0050 | 0.0050 | 0.0050 | 0.0050 | 0.0050 | 0.0050 | 0.0050 |
| Wettability rate evaluation | | ○ | ○ | ○ | ○ | ○ | ○ | ○ | ○ | ○ | ○ |

Table 1D to Table 6D respectively correspond to Table 1A to Table 6A, except that the solder alloy further contains 0.0100 wt% of As.

**[Table 1D]**

| Flux material | | Ex 1D-1 | Ex 1D-2 | Ex 1D-3 | Ex 1D-4 | Com. Ex 1D-1 | Com. Ex 1D-2 | Com. Ex 1D-3 |
|---|---|---|---|---|---|---|---|---|
| Solvent | 2-propanol | 88.00 | 88.00 | 88.00 | 88.00 | 88.00 | 88.00 | 88.00 |
| | Ethanol | | | | | | | |
| Acid-modified rosin | Acrylic acid-modified hydrogenated rosin | 12.0 | | | | | | |
| | Acrylic acid-modified rosin | | 12.0 | | | | | |
| | Maleic acid-modified hydrogenated rosin | | | 12.0 | 6.0 | 2.0 | | |
| Rosin | Hydrogenated rosin | | | | 6.0 | | 12.0 | |
| | Polymerized rosin | | | | | 10.0 | | 12.0 |
| Organic acid | Succinic acid | | | | | | | |
| | Adipic acid | | | | | | | |
| | Suberic acid | | | | | | | |
| Organic halogen compounds | Chlorendic acid | | | | | | | |
| | Chlorendic anhydride | | | | | | | |
| | Trans-2,3-dibromo-2-butene-1,4-diol | | | | | | | |
| Amine hydrohalide salt | Piperidine trifluoroborate complex salt | | | | | | | |
| | Ethylamine·HBr | | | | | | | |
| Amine | Cyclohexylamine | | | | | | | |
| Phosphonic acid ester | 2-ethylhexyl(2-ethylhexyl) phosphonate | | | | | | | |
| Phenyl-substituted phosphinic acid | Phenylphosphinic acid | | | | | | | |
| Matting agent | Palmitic acid | | | | | | | |
| Total | | 100.00 | 100.00 | 100.00 | 100.00 | 100.00 | 100.00 | 100.00 |
| Solder alloy | | | | | | | | |
| Sn | | Bal. | Bal. | Bal. | Bal. | Bal. | Bal. | Bal. |
| Ag | | | | | | | | |
| Cu | | 0.65 | 0.65 | 0.65 | 0.65 | 0.65 | 0.65 | 0.65 |
| Ni | | | | | | | | |
| Ge | | 0.008 | 0.008 | 0.008 | 0.008 | 0.008 | 0.008 | 0.008 |
| As | | 0.0100 | 0.0100 | 0.0100 | 0.0100 | 0.0100 | 0.0100 | 0.0100 |
| Wettability rate evaluation | | ○ | ○ | ○ | ○ | X | X | X |

**[Table 2D]**

| Flux material | | Ex. 2D-1 | Ex. 2D-2 | Ex 2D-3 | Com. Ex 2D-1 | Com. Ex 2D-2 |
|---|---|---|---|---|---|---|
| Solvent | 2-propanol | 88.00 | 88.00 | 88.00 | 88.00 | 88.00 |
| | Ethanol | | | | | |
| Acid-modified rosin | Acrylic acid-modified hydrogenated rosin | 12.0 | | | | |
| | Acrylic acid-modified rosin | | 12.0 | | | |
| | Maleic acid-modified hydrogenated rosin | | | 12.0 | | |
| Rosin | Hydrogenated rosin | | | | 12.0 | |
| | Polymerized rosin | | | | | 12.0 |
| Organic acid | Succinic acid | | | | | |
| | Adipic acid | | | | | |
| | Suberic acid | | | | | |
| Organic halogen compounds | Chlorendic acid | | | | | |
| | Chlorendic anhydride | | | | | |
| | Trans-2,3-dibromo-2-butene-1,4-diol | | | | | |
| Amine hydrohalide salt | Piperidine trifluoroborate complex salt | | | | | |
| | Ethylamine·HBr | | | | | |
| Amine | Cyclohexylamine | | | | | |
| Phosphonic acid ester | 2-ethylhexyl(2-ethylhexyl)phosphonate | | | | | |
| Phenyl-substituted phosphinic acid | Phenylphosphinic acid | | | | | |
| Matting agent | Palmitic acid | | | | | |
| Total | | 100.00 | 100.00 | 100.00 | 100.00 | 100.00 |
| Solder alloy | | | | | | |
| Sn | | Bal. | Bal. | Bal. | Bal. | Bal. |
| Ag | | | | | | |
| Cu | | 0.65 | 0.65 | 0.65 | 0.65 | 0.65 |
| Ni | | 0.05 | 0.05 | 0.05 | 0.05 | 0.05 |
| Ge | | 0.008 | 0.008 | 0.008 | 0.008 | 0.008 |
| As | | 0.0100 | 0.0100 | 0.0100 | 0.0100 | 0.0100 |
| Wettability rate evaluation | | ○ | ○ | ○ | X | X |

**[Table 3D]**

| Flux material | | Com. Ex 3D-1 | Com. Ex 3D-2 | Com. Ex 3D-3 | Com. Ex 3D-4 | Com. Ex 3D-5 |
|---|---|---|---|---|---|---|
| Solvent | 2-propanol | 88.00 | 88.00 | 88.00 | 88.00 | 88.00 |
| | Ethanol | | | | | |
| Acid-modified rosin | Acrylic acid-modified hydrogenated rosin | 12.0 | | | | |
| | Acrylic acid-modified rosin | | 12.0 | | | |
| | Maleic acid-modified hydrogenated rosin | | | 12.0 | | |
| Rosin | Hydrogenated rosin | | | | 12.0 | |
| | Polymerized rosin | | | | | 12.0 |
| Organic acid | Succinic acid | | | | | |
| | Adipic acid | | | | | |
| | Suberic acid | | | | | |
| Organic halogen compounds | Chlorendic acid | | | | | |
| | Chlorendic anhydride | | | | | |
| | Trans-2,3-dibromo-2-butene-1,4-diol | | | | | |
| Amine hydrohalide salt | Piperidine trifluoroborate complex salt | | | | | |
| | Ethylamine·HBr | | | | | |
| Amine | Cyclohexylamine | | | | | |
| Phosphonic acid ester | 2-ethylhexyl(2-ethylhexyl)phosphonate | | | | | |
| Phenyl-substituted phosphinic acid | Phenylphosphinic acid | | | | | |
| Matting agent | Palmitic acid | | | | | |
| Total | | 100.00 | 100.00 | 100.00 | 100.00 | 100.00 |
| Solder alloy | | | | | | |
| Sn | | Bal. | Bal. | Bal. | Bal. | Bal. |
| Ag | | | | | | |
| Cu | | 0.65 | 0.65 | 0.65 | 0.65 | 0.65 |
| Ni | | | | | | |
| Ge | | | | | | |
| As | | 0.0100 | 0.0100 | 0.0100 | 0.0100 | 0.0100 |
| Wettability rate evaluation | | X | X | X | X | X |

**[Table 4D]**

| Flux material | | Ex. 4D-1 | Ex 4D-2 | Ex 4D-3 | Ex 4D-4 | Ex 4D-5 | Ex 4D-6 |
|---|---|---|---|---|---|---|---|
| Solvent | 2-propanol | 88.00 | 88.00 | 88.00 | 88.00 | 88.00 | 88.00 |
| | Ethanol | | | | | | |
| Acid-modified rosin | Acrylic acid-modified hydrogenated rosin | 12.0 | 12.0 | 12.0 | 12.0 | 12.0 | 12.0 |
| | Acrylic acid-modified rosin | | | | | | |
| | Maleic acid-modified hydrogenated rosin | | | | | | |
| Rosin | Hydrogenated rosin | | | | | | |
| | Polymerized rosin | | | | | | |
| Organic acid | Succinic acid | | | | | | |
| | Adipic acid | | | | | | |
| | Suberic acid | | | | | | |
| Organic halogen compounds | Chlorendic acid | | | | | | |
| | Chlorendic anhydride | | | | | | |
| | Trans-2,3-dibromo-2-butene-1,4-diol | | | | | | |
| Amine hydrohalide salt | Piperidine trifluoroborate complex salt | | | | | | |
| | Ethylamine·HBr | | | | | | |
| Amine | Cyclohexylamine | | | | | | |
| Phosphonic acid ester | 2-ethylhexyl(2-ethylhexyl) phosphonate | | | | | | |
| Phenyl-substituted phosphinic acid | Phenylphosphinic acid | | | | | | |
| Matting agent | Palmitic acid | | | | | | |
| Total | | 100.00 | 100.00 | 100.00 | 100.00 | 100.00 | 100.00 |
| Solder alloy | | | | | | | |
| Sn | | Bal. | Bal. | Bal. | Bal. | Bal. | Bal. |
| Ag | | | | | | | |
| Cu | | 0.3 | 0.75 | 0.65 | 0.65 | 0.65 | 0.65 |
| Ni | | 0.05 | 0.05 | 0.01 | 0.1 | 0.05 | 0.05 |
| Ge | | 0.008 | 0.008 | 0.008 | 0.008 | 0.004 | 0.015 |
| As | | 0.0100 | 0.0100 | 0.0100 | 0.0100 | 0.0100 | 0.0100 |
| Wettability rate evaluation | | ○ | ○ | ○ | ○ | ○ | ○ |

**[Table 5D]**

| Flux material | | Ex. 5D-1 | Ex 5D-2 | Ex 5D-3 | Ex 5D-4 | Ex 5D-5 | Ex 5D-6 | Ex 5D-7 | Ex 5D-8 | Ex 5D-9 | Ex 5D-10 | Ex 5D-11 | Ex 5D-12 | Ex 5D-13 |
|---|---|---|---|---|---|---|---|---|---|---|---|---|---|---|
| Solvent | 2-propanol | | | | 88.00 | 44.0 | 88.00 | 88.00 | 88.00 | 85.00 | 88.00 | 88.00 | 88.00 | 88.00 |
| | Ethanol | 88.00 | 88.00 | 88. 00 | | 44.0 | | | | | | | | |
| Acid-modified rosin | Acrylic acid-modified hydrogenated rosin | 12.0 | | | | 4.0 | 11.5 | 11.5 | 11.5 | | 11.0 | 11.0 | 11.0 | 9.0 |
| | Acrylic acid-modified rosin | | 12. 0 | | | 4.0 | | | | | | | | |
| | Maleic acid-modified hydrogenated rosin | | | 12. 0 | 6.0 | 4.0 | | | | 4.0 | | | | |
| Rosin | Hydrogenated rosin | | | | 3.0 | | | | | 4.0 | | | | |
| | Polymerized rosin | | | | 3.0 | | | | | 4.0 | | | | |
| Organic acid | Succinic acid | | | | | | 0.5 | | | 1.0 | | | | |
| | Adipic acid | | | | | | | 0.5 | | 1.0 | | | | |
| | Suberic acid | | | | | | | | 0.5 | 1.0 | | | | |
| Organic halogen compounds | Chlorendic acid | | | | | | | | | | 1.0 | | | 1.0 |
| | Chlorendic anhydride | | | | | | | | | | | 1.0 | | 1.0 |
| | Trans-2,3-dibromo-2-butene-1,4-diol | | | | | | | | | | | | 1.0 | 1.0 |
| Amine hydrohalide salt | Piperidine trifluoroborate complex salt | | | | | | | | | | | | | |
| | Ethylamine·HBr | | | | | | | | | | | | | |
| Amine | Cyclohexylamine | | | | | | | | | | | | | |
| Phosphonic acid ester | 2-ethylhexyl(2-ethylhexyl)phosph onate | | | | | | | | | | | | | |
| Phenyl-substituted phosphinic acid | Phenylphosphinic acid | | | | | | | | | | | | | |
| Matting agent | Palmitic acid | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | | |
| Sn | | Bal. | Bal. | Bal. | Bal. | Bal. | Bal. | Bal. | Bal. | Bal. | Bal. | Bal. | Bal. | Bal. |
| Ag | | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 | 0.008 |
| As | | 0.0100 | 0.0100 | 0.0100 | 0.0100 | 0.0100 | 0.0100 | 0.0100 | 0.0100 | 0.0100 | 0.0100 | 0.0100 | 0.0100 | 0.0100 |
| Wettability rate evaluation | | ○ | ○ | ○ | ○ | ○ | ○ | ○ | ○ | ○ | ○ | ○ | ○ | ○ |

**[Table 6D]**

| Flux material | | Ex 6D-1 | Ex 6D-2 | Ex 6D-3 | Ex 6D-4 | Ex 6D-5 | Ex 6D-6 | Ex 6D-7 | Ex 6D-8 | Ex 6D-9 | Ex 6D-10 |
|---|---|---|---|---|---|---|---|---|---|---|---|
| Solvent | 2-propanol | 88.00 | 88.00 | 88.00 | 87.00 | 88.00 | 88.00 | 88.00 | 88.00 | 85.60 | |
| | Ethanol | | | | | | | | | | 85.60 |
| Acid-modified rosin | Acrylic acid-modified hydrogenated rosin | 11.0 | 11.0 | 11.0 | 9.0 | 11.0 | 11.0 | 10.0 | 10.0 | 3.0 | 3.0 |
| | Acrylic acid-modified rosin | | | | | | | | | 3.0 | 3.0 |
| | Maleic acid-modified hydrogenated rosin | | | | | | | | | 3.0 | 3.0 |
| Rosin | Hydrogenated rosin | | | | | | | | | 1.5 | 1.5 |
| | Polymerized rosin | | | | | | | | | 1.5 | 1.5 |
| Organic acid | Succinic acid | | | | 3.0 | | | | | 0.5 | 0.5 |
| | Adipic acid | | | | | | | | | 0.5 | 0.5 |
| | Suberic acid | | | | | | | | | 0.5 | 0.5 |
| Organic halogen compounds | Chlorendic acid | | | | | | | | | 0.1 | 0.1 |
| | Chlorendic anhydride | | | | | | | | | 0.1 | 0.1 |
| | Trans-2,3-dibromo-2-butene-1,4-diol | | | | | | | | | 0.1 | 0.1 |
| Amine hydrohalide salt | Piperidine trifluoroborate complex salt | 1.0 | | 0.5 | | | | | | 0.1 | 0.1 |
| | Ethylamine·HBr | | 1.0 | 0.5 | | | | | | 0.1 | 0.1 |
| Amine | Cyclohexylamine | | | | 1.0 | | | | | 0.1 | 0.1 |
| Phosphonic acid ester | 2-ethylhexyl(2-ethylhexyl)phosphon ate | | | | | 1.0 | | 1.0 | | 0.1 | 0.1 |
| Phenyl-substituted phosphinic acid | Phenylphosphinic acid | | | | | | 1.0 | 1.0 | | 0.1 | 0.1 |
| Matting agent | Palmitic acid | | | | | | | | 2.0 | 0.1 | 0.1 |
| Total | | 100.00 | 100.00 | 100.00 | 100.00 | 100.00 | 100.00 | 100.00 | 100.00 | 100.00 | 100.00 |
| Solder alloy | | | | | | | | | | | |
| Sn | | Bal. | Bal. | Bal. | Bal. | Bal. | Bal. | Bal. | Bal. | Bal. | Bal. |
| Ag | | | | | | | | | | | |
| Cu | | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 |
| As | | 0.0100 | 0.0100 | 0.0100 | 0.0100 | 0.0100 | 0.0100 | 0.0100 | 0.0100 | 0.0100 | 0.0100 |
| Wettability rate evaluation | | ○ | ○ | ○ | ○ | ○ | ○ | ○ | ○ | ○ | ○ |

Table 1E to Table 6E respectively correspond to Table 1A to Table 6A, except that the solder alloy further contains 0.0150 wt% of As.

**[Table 1E]**

| Flux material | | Ex 1E-1 | Ex 1E-2 | Ex 1E-3 | Ex 1E-4 | Com. Ex 1E-1 | Com. Ex 1E-2 | Com. Ex 1E-3 |
|---|---|---|---|---|---|---|---|---|
| Solvent | 2-propanol | 88.00 | 88.00 | 88.00 | 88.00 | 88.00 | 88.00 | 88.00 |
| | Ethanol | | | | | | | |
| Acid-modified rosin | Acrylic acid-modified hydrogenated rosin | 12.0 | | | | | | |
| | Acrylic acid-modified rosin | | 12.0 | | | | | |
| | Maleic acid-modified hydrogenated rosin | | | 12.0 | 6.0 | 2.0 | | |
| Rosin | Hydrogenated rosin | | | | 6.0 | | 12.0 | |
| | Polymerized rosin | | | | | 10.0 | | 12.0 |
| Organic acid | Succinic acid | | | | | | | |
| | Adipic acid | | | | | | | |
| | Suberic acid | | | | | | | |
| Organic halogen compounds | Chlorendic acid | | | | | | | |
| | Chlorendic anhydride | | | | | | | |
| | Trans-2,3-dibromo-2-butene-1,4-diol | | | | | | | |
| Amine hydrohalide salt | Piperidine trifluoroborate complex salt | | | | | | | |
| | Ethylamine·HBr | | | | | | | |
| Amine | Cyclohexylamine | | | | | | | |
| Phosphonic acid ester | 2-ethylhexyl(2-ethylhexyl) phosphonate | | | | | | | |
| Phenyl-substituted phosphinic acid | Phenylphosphinic acid | | | | | | | |
| Matting agent | Palmitic acid | | | | | | | |
| Total | | 100.00 | 100.00 | 100.00 | 100.00 | 100.00 | 100.00 | 100.00 |
| Solder alloy | | | | | | | | |
| Sn | | Bal. | Bal. | Bal. | Bal. | Bal. | Bal. | Bal. |
| Ag | | | | | | | | |
| Cu | | 0.65 | 0.65 | 0.65 | 0.65 | 0.65 | 0.65 | 0.65 |
| Ni | | | | | | | | |
| Ge | | 0.008 | 0.008 | 0.008 | 0.008 | 0.008 | 0.008 | 0.008 |
| As | | 0.0150 | 0.0150 | 0.0150 | 0.0150 | 0.0150 | 0.0150 | 0.0150 |
| Wettability rate evaluation | | ○ | ○ | ○ | ○ | X | X | X |

**[Table 2E]**

| Flux material | | Ex.2E-1 | Ex. 2E-2 | Ex. 2E-3 | Com. Ex 2E-1 | Com. Ex 2E-2 |
|---|---|---|---|---|---|---|
| Solvent | 2-propanol | 88.00 | 88.00 | 88.00 | 88.00 | 88.00 |
| | Ethanol | | | | | |
| Acid-modified rosin | Acrylic acid-modified hydrogenated rosin | 12.0 | | | | |
| | Acrylic acid-modified rosin | | 12.0 | | | |
| | Maleic acid-modified hydrogenated rosin | | | 12.0 | | |
| Rosin | Hydrogenated rosin | | | | 12.0 | |
| | Polymerized rosin | | | | | 12.0 |
| Organic acid | Succinic acid | | | | | |
| | Adipic acid | | | | | |
| | Suberic acid | | | | | |
| Organic halogen compounds | Chlorendic acid | | | | | |
| | Chlorendic anhydride | | | | | |
| | Trans-2,3-dibromo-2-butene-1,4-diol | | | | | |
| Amine hydrohalide salt | Piperidine trifluoroborate complex salt | | | | | |
| | Ethylamine·HBr | | | | | |
| Amine | Cyclohexylamine | | | | | |
| Phosphonic acid ester | 2-ethylhexyl(2-ethylhexyl)phosphonate | | | | | |
| Phenyl-substituted phosphinic acid | Phenylphosphinic acid | | | | | |
| Matting agent | Palmitic acid | | | | | |
| Total | | 100.00 | 100.00 | 100.00 | 100.00 | 100.00 |
| Solder alloy | | | | | | |
| Sn | | Bal. | Bal. | Bal. | Bal. | Bal. |
| Ag | | | | | | |
| Cu | | 0.65 | 0.65 | 0.65 | 0.65 | 0.65 |
| Ni | | 0.05 | 0.05 | 0.05 | 0.05 | 0.05 |
| Ge | | 0.008 | 0.008 | 0.008 | 0.008 | 0.008 |
| As | | 0.0150 | 0.0150 | 0.0150 | 0.0150 | 0.0150 |
| Wettability rate evaluation | | ○ | ○ | ○ | X | X |

**[Table 3E]**

| Flux material | | Com. Ex 3E-1 | Com. Ex 3E-2 | Com. Ex 3E-3 | Com. Ex 3E-4 | Com. Ex 3E-5 |
|---|---|---|---|---|---|---|
| Solvent | 2-propanol | 88.00 | 88.00 | 88.00 | 88.00 | 88.00 |
| | Ethanol | | | | | |
| Acid-modified rosin | Acrylic acid-modified hydrogenated rosin | 12.0 | | | | |
| | Acrylic acid-modified rosin | | 12.0 | | | |
| | Maleic acid-modified hydrogenated rosin | | | 12.0 | | |
| Rosin | Hydrogenated rosin | | | | 12.0 | |
| | Polymerized rosin | | | | | 12.0 |
| Organic acid | Succinic acid | | | | | |
| | Adipic acid | | | | | |
| | Suberic acid | | | | | |
| Organic halogen compounds | Chlorendic acid | | | | | |
| | Chlorendic anhydride | | | | | |
| | Trans-2,3-dibromo-2-butene-1,4-diol | | | | | |
| Amine hydrohalide salt | Piperidine trifluoroborate complex salt | | | | | |
| | Ethylamine·HBr | | | | | |
| Amine | Cyclohexylamine | | | | | |
| Phosphonic acid ester | 2-ethylhexyl(2-ethylhexyl)phosphonate | | | | | |
| Phenyl-substituted phosphinic acid | Phenylphosphinic acid | | | | | |
| Matting agent | Palmitic acid | | | | | |
| Total | | 100.00 | 100.00 | 100.00 | 100.00 | 100.00 |
| Solder alloy | | | | | | |
| Sn | | Bal. | Bal. | Bal. | Bal. | Bal. |
| Ag | | | | | | |
| Cu | | 0.65 | 0.65 | 0.65 | 0.65 | 0.65 |
| Ni | | | | | | |
| Ge | | | | | | |
| As | | 0.0150 | 0.0150 | 0.0150 | 0.0150 | 0.0150 |
| Wettability rate evaluation | | X | X | X | X | X |

**[Table 4E]**

| Flux material | | Ex. 4E-1 | Ex 4E-2 | Ex 4E-3 | Ex 4E-4 | Ex 4E-5 | Ex 4E-6 |
|---|---|---|---|---|---|---|---|
| Solvent | 2-propanol | 88.00 | 88.00 | 88.00 | 88.00 | 88.00 | 88.00 |
| | Ethanol | | | | | | |
| Acid-modified rosin | Acrylic acid-modified hydrogenated rosin | 12.0 | 12.0 | 12.0 | 12.0 | 12.0 | 12.0 |
| | Acrylic acid-modified rosin | | | | | | |
| | Maleic acid-modified hydrogenated rosin | | | | | | |
| Rosin | Hydrogenated rosin | | | | | | |
| | Polymerized rosin | | | | | | |
| Organic acid | Succinic acid | | | | | | |
| | Adipic acid | | | | | | |
| | Suberic acid | | | | | | |
| Organic halogen compounds | Chlorendic acid | | | | | | |
| | Chlorendic anhydride | | | | | | |
| | Trans-2,3-dibromo-2-butene-1,4-diol | | | | | | |
| Amine hydrohalide salt | Piperidine trifluoroborate complex salt | | | | | | |
| | Ethylamine·HBr | | | | | | |
| Amine | Cyclohexylamine | | | | | | |
| Phosphonic acid ester | 2-ethylhexyl(2-ethylhexyl) phosphonate | | | | | | |
| Phenyl-substituted phosphinic acid | Phenylphosphinic acid | | | | | | |
| Matting agent | Palmitic acid | | | | | | |
| Total | | 100.00 | 100.00 | 100.00 | 100.00 | 100.00 | 100.00 |
| Solder alloy | | | | | | | |
| Sn | | Bal. | Bal. | Bal. | Bal. | Bal. | Bal. |
| Ag | | | | | | | |
| Cu | | 0.3 | 0.75 | 0.65 | 0.65 | 0.65 | 0.65 |
| Ni | | 0.05 | 0.05 | 0.01 | 0.1 | 0.05 | 0.05 |
| Ge | | 0.008 | 0.008 | 0.008 | 0.008 | 0.004 | 0.015 |
| As | | 0.0150 | 0.0150 | 0.0150 | 0.0150 | 0.0150 | 0.0150 |
| Wettability rate evaluation | | ○ | ○ | ○ | ○ | ○ | ○ |

**[Table 5E]**

| Flux material | | Ex. 5E-1 | Ex 5E-2 | Ex 5E-3 | Ex 5E-4 | Ex 5E-5 | Ex 5E-6 | Ex 5E-7 | Ex 5E-8 | Ex 5E-9 | Ex 5E-10 | Ex 5E-11 | Ex 5E-12 | Ex 5E-13 |
|---|---|---|---|---|---|---|---|---|---|---|---|---|---|---|
| Solvent | 2-propanol | | | | 88.00 | 44.0 | 88.00 | 88.00 | 88.00 | 85.00 | 88.00 | 88.00 | 88.00 | 88.00 |
| | Ethanol | 88.00 | 88.00 | 88.00 | | 44.0 | | | | | | | | |
| Acid-modified rosin | Acrylic acid-modified hydrogenated rosin | 12.0 | | | | 4.0 | 11.5 | 11.5 | 11.5 | | 11.0 | 11.0 | 11.0 | 9.0 |
| | Acrylic acid-modified rosin | | 12.0 | | | 4.0 | | | | | | | | |
| | Maleic acid-modified hydrogenated rosin | | | 12.0 | 6.0 | 4.0 | | | | 4.0 | | | | |
| Rosin | Hydrogenated rosin | | | | 3.0 | | | | | 4.0 | | | | |
| | Polymerized rosin | | | | 3.0 | | | | | 4.0 | | | | |
| Organic acid | Succinic acid | | | | | | 0.5 | | | 1.0 | | | | |
| | Adipic acid | | | | | | | 0.5 | | 1.0 | | | | |
| | Suberic acid | | | | | | | | 0.5 | 1.0 | | | | |
| Organic halogen compounds | Chlorendic acid | | | | | | | | | | 1.0 | | | 1.0 |
| | Chlorendic anhydride | | | | | | | | | | | 1.0 | | 1.0 |
| | Trans-2,3-dibromo-2-butene-1,4-diol | | | | | | | | | | | | 1.0 | 1.0 |
| Amine hydrohalide salt | Piperidine trifluoroborate complex salt | | | | | | | | | | | | | |
| | Ethylamine·HBr | | | | | | | | | | | | | |
| Amine | Cyclohexylamine | | | | | | | | | | | | | |
| Phosphonic acid ester | 2-ethylhexyl(2-ethylhexyl)phosp honate | | | | | | | | | | | | | |
| Phenyl-substituted phosphinic acid | Phenylphosphinic acid | | | | | | | | | | | | | |
| Matting agent | Palmitic acid | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | | |
| Sn | | Bal. | Bal. | Bal. | Bal. | Bal. | Bal. | Bal. | Bal. | Bal. | Bal. | Bal. | Bal. | Bal. |
| Ag | | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 | 0.008 |
| As | | 0.0150 | 0.0150 | 0.0150 | 0.0150 | 0.0150 | 0.0150 | 0.0150 | 0.0150 | 0.0150 | 0.0150 | 0.0150 | 0.0150 | 0.0150 |
| Wettability rate evaluation | | ○ | ○ | ○ | ○ | ○ | ○ | ○ | ○ | ○ | ○ | ○ | ○ | ○ |

**[Table 6E]**

| Flux material | | Ex 6E-1 | Ex 6E-2 | Ex 6E-3 | Ex 6E-4 | Ex 6E-5 | Ex 6E-6 | Ex 6E-7 | Ex 6E-8 | Ex 6E-9 | Ex 6E-10 |
|---|---|---|---|---|---|---|---|---|---|---|---|
| Solvent | 2-propanol | 88.00 | 88.00 | 88.00 | 87.00 | 88.00 | 88.00 | 88.00 | 88.00 | 85.60 | |
| | Ethanol | | | | | | | | | | 85.60 |
| Acid-modified rosin | Acrylic acid-modified hydrogenated rosin | 11.0 | 11.0 | 11.0 | 9.0 | 11.0 | 11.0 | 10.0 | 10.0 | 3.0 | 3.0 |
| | Acrylic acid-modified rosin | | | | | | | | | 3.0 | 3.0 |
| | Maleic acid-modified hydrogenated rosin | | | | | | | | | 3.0 | 3.0 |
| Rosin | Hydrogenated rosin | | | | | | | | | 1.5 | 1.5 |
| | Polymerized rosin | | | | | | | | | 1.5 | 1.5 |
| Organic acid | Succinic acid | | | | 3.0 | | | | | 0.5 | 0.5 |
| | Adipic acid | | | | | | | | | 0.5 | 0.5 |
| | Suberic acid | | | | | | | | | 0.5 | 0.5 |
| Organic halogen compounds | Chlorendic acid | | | | | | | | | 0.1 | 0.1 |
| | Chlorendic anhydride | | | | | | | | | 0.1 | 0.1 |
| | Trans-2,3-dibromo-2-butene-1,4-diol | | | | | | | | | 0.1 | 0.1 |
| Amine hydrohalide salt | Piperidine trifluoroborate complex salt | 1.0 | | 0.5 | | | | | | 0.1 | 0.1 |
| | Ethylamine·HBr | | 1.0 | 0.5 | | | | | | 0.1 | 0.1 |
| Amine | Cyclohexylamine | | | | 1.0 | | | | | 0.1 | 0.1 |
| Phosphonic acid ester | 2-ethylhexyl(2-ethylhexyl)phosphon ate | | | | | 1.0 | | 1.0 | | 0.1 | 0.1 |
| Phenyl-substituted phosphinic acid | Phenylphosphinic acid | | | | | | 1.0 | 1.0 | | 0.1 | 0.1 |
| Matting agent | Palmitic acid | | | | | | | | 2.0 | 0.1 | 0.1 |
| Total | | 100.00 | 100.00 | 100.00 | 100.00 | 100.00 | 100.00 | 100.00 | 100.00 | 100.00 | 100.00 |
| Solder alloy | | | | | | | | | | | |
| Sn | | Bal. | Bal. | Bal. | Bal. | Bal. | Bal. | Bal. | Bal. | Bal. | Bal. |
| Ag | | | | | | | | | | | |
| Cu | | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 |
| As | | 0.0150 | 0.0150 | 0.0150 | 0.0150 | 0.0150 | 0.0150 | 0.0150 | 0.0150 | 0.0150 | 0.0150 |
| Wettability rate evaluation | | ○ | ○ | ○ | ○ | ○ | ○ | ○ | ○ | ○ | ○ |

Table 1F sets out results of cases where chlorendic acid and/or chlorendic anhydride are used and not used for a Sn-Cu-Ge-based solder alloy.
Table 2F sets out results of cases where chlorendic acid and/or chlorendic anhydride are used and not used for a Sn-Cu-Ni-Ge-based solder alloy.
Table 3F sets out results of cases where chlorendic acid and/or chlorendic anhydride are used and not used for a Sn-Cu-based solder alloy.
Table 4F sets out results of a case where the composition of the solder alloy is modified.
Table 5F and Table 6F set out results of a case where the flux composition is modified.

**[Table 1F]**

| Flux material | | Ex. 1F-1 | Ex 1F-2 | Com. Ex. 1F-1 | Com. Ex. 1F-2 |
|---|---|---|---|---|---|
| Solvent | 2-propanol | 87.90 | 87.90 | 88.00 | 87.90 |
| | Ethanol | | | | |
| Acid-modified rosin | Acrylic acid-modified hydrogenated rosin | | | | |
| | Acrylic acid-modified rosin | | | | |
| | Maleic acid-modified hydrogenated rosin | | | | |
| Rosin | Hydrogenated rosin | | | | |
| | Polymerized rosin | 12.0 | 12.0 | 12.0 | 12.0 |
| Organic acid | Succinic acid | | | | |
| | Adipic acid | | | | |
| | Suberic acid | | | | |
| Organic halogen compounds | Chlorendic acid | 0.1 | | | |
| | Chlorendic anhydride | | 0.1 | | |
| | 1,2,4,5-tetrabromobenzene | | | | 0.1 |
| Amine hydrohalide salt | Piperidine trifluoroborate complex salt | | | | |
| | Ethylamine·HBr | | | | |
| Amine | Cyclohexylamine | | | | |
| Phosphonic acid ester | 2-ethylhexyl(2-ethylhexyl)phosphonate | | | | |
| Phenyl-substituted phosphinic acid | Phenylphosphinic acid | | | | |
| Matting agent | Palmitic acid | | | | |
| Total | | 100.00 | 100.00 | 100.00 | 100.00 |
| Solder alloy | | | | | |
| Sn | | Bal. | Bal. | Bal. | Bal. |
| Ag | | | | | |
| Cu | | 0.65 | 0.65 | 0.65 | 0.65 |
| Ni | | | | | |
| Ge | | 0.008 | 0.008 | 0.008 | 0.008 |
| As | | | | | |
| Wettability rate evaluation | | ○ | ○ | X | X |

**[Table 2F]**

| Flux material | | Ex 2F-1 | Ex. 2F-2 | Com. Ex. 2F-1 |
|---|---|---|---|---|
| Solvent | 2-propanol | 87.90 | 87.90 | 87.90 |
| | Ethanol | | | |
| Acid-modified rosin | Acrylic acid-modified hydrogenated rosin | | | |
| | Acrylic acid-modified rosin | | | |
| | Maleic acid-modified hydrogenated rosin | | | |
| Rosin | Hydrogenated rosin | | | |
| | Polymerized rosin | 12.0 | 12.0 | 12.0 |
| Organic acid | Succinic acid | | | |
| | Adipic acid | | | |
| | Suberic acid | | | |
| Organic halogen compounds | Chlorendic acid | 0.1 | | |
| | Chlorendic anhydride | | 0.1 | |
| | 1,2,4,5-tetrabromobenzene | | | 0.1 |
| Amine hydrohalide salt | Piperidine trifluoroborate complex salt | | | |
| | Ethylamine·HBr | | | |
| Amine | Cyclohexylamine | | | |
| Phosphonic acid ester | 2-ethylhexyl(2-ethylhexyl)phosphonate | | | |
| Phenyl-substituted phosphinic acid | Phenylphosphinic acid | | | |
| Matting agent | Palmitic acid | | | |
| Total | | 100.00 | 100.00 | 100.00 |
| Solder alloy | | | | |
| Sn | | Bal. | Bal. | Bal. |
| Ag | | | | |
| Cu | | 0.65 | 0.65 | 0.65 |
| Ni | | 0.05 | 0.05 | 0.05 |
| Ge | | 0.008 | 0.008 | 0.008 |
| As | | | | |
| Wettability rate evaluation | | O | O | X |

**[Table 3F]**

| Flux material | | Com. Ex. 3F-1 | Com. Ex. 3F-2 | Com. Ex. 3F-3 |
|---|---|---|---|---|
| Solvent | 2-propanol | 87.90 | 87.90 | 87.90 |
| | Ethanol | | | |
| Acid-modified rosin | Acrylic acid-modified hydrogenated rosin | | | |
| | Acrylic acid-modified rosin | | | |
| | Maleic acid-modified hydrogenated rosin | | | |
| Rosin | Hydrogenated rosin | | | |
| | Polymerized rosin | 12.0 | 12.0 | 12.0 |
| Organic acid | Succinic acid | | | |
| | Adipic acid | | | |
| | Suberic acid | | | |
| Organic halogen compounds | Chlorendic acid | 0.1 | | |
| | Chlorendic anhydride | | 0.1 | |
| | 1,2,4,5-tetrabromobenzene | | | 0.1 |
| Amine hydrohalide salt | Piperidine trifluoroborate complex salt | | | |
| | Ethylamine·HBr | | | |
| Amine | Cyclohexylamine | | | |
| Phosphonic acid ester | 2-ethylhexyl(2-ethylhexyl)phosphonate | | | |
| Phenyl-substituted phosphinic acid | Phenylphosphinic acid | | | |
| Matting agent | Palmitic acid | | | |
| Total | | 100.00 | 100.00 | 100.00 |
| Solder alloy | | | | |
| Sn | | Bal. | Bal. | Bal. |
| Ag | | | | |
| Cu | | 0.65 | 0.65 | 0.65 |
| Ni | | | | |
| Ge | | | | |
| As | | | | |
| Wettability rate evaluation | | X | X | X |

**[Table 4F]**

| Flux material | | Ex. 4F-1 | Ex 4F-2 | Ex 4F-3 | Ex 4F-4 | Ex 4F-5 | Ex 4F-6 |
|---|---|---|---|---|---|---|---|
| Solvent | 2-propanol | 87.90 | 87.90 | 87.90 | 87.90 | 87.90 | 87.90 |
| | Ethanol | | | | | | |
| Acid-modified rosin | Acrylic acid-modified hydrogenated rosin | | | | | | |
| | Acrylic acid-modified rosin | | | | | | |
| | Maleic acid-modified hydrogenated rosin | | | | | | |
| Rosin | Hydrogenated rosin | | | | | | |
| | Polymerized rosin | 12.0 | 12.0 | 12.0 | 12.0 | 12.0 | 12.0 |
| Organic acid | Succinic acid | | | | | | |
| | Adipic acid | | | | | | |
| | Suberic acid | | | | | | |
| Organic halogen compounds | Chlorendic acid | 0.1 | 0.1 | 0.1 | 0.1 | 0.1 | 0.1 |
| | Chlorendic anhydride | | | | | | |
| | 1,2,4,5-tetrabromobenzene | | | | | | |
| Amine hydrohalide salt | Piperidine trifluoroborate complex salt | | | | | | |
| | Ethylamine·HBr | | | | | | |
| Amine | Cyclohexylamine | | | | | | |
| Phosphonic acid ester | 2-ethylhexyl(2-ethylhexyl) ph osphonate | | | | | | |
| Phenyl-substituted phosphinic acid | Phenylphosphinic acid | | | | | | |
| Matting agent | Palmitic acid | | | | | | |
| Total | | 100.00 | 100.00 | 100.00 | 100.00 | 100.00 | 100.00 |

| Solder alloy | | | | | | | |
|---|---|---|---|---|---|---|---|
| Sn | | Bal. | Bal. | Bal. | Bal. | Bal. | Bal. |
| Ag | | | | | | | |
| Cu | | 0.3 | 0.75 | 0.65 | 0.65 | 0.65 | 0.65 |
| Ni | | 0.05 | 0.05 | 0.01 | 0.1 | 0.05 | 0.05 |
| Ge | | 0.008 | 0.008 | 0.008 | 0.008 | 0.004 | 0.015 |
| As | | | | | | | |
| Wettability rate evaluation | | ○ | ○ | ○ | ○ | ○ | ○ |

**[Table 5F]**

| Flux material | | Ex. 5F-1 | Ex 5F-2 | Ex 5F-3 | Ex 5F-4 | Ex 5F-5 | Ex 5F-6 | Ex 5F-7 | Ex 5F-8 | Ex 5F-9 | Ex 5F-10 | Ex 5F-11 | Ex 5F-12 | Ex 5F-13 |
|---|---|---|---|---|---|---|---|---|---|---|---|---|---|---|
| Solvent | 2-propanol | | | | 87.90 | 43.9 | 87.50 | 87.00 | 85.00 | 87.90 | 87.90 | 87.90 | 84.90 | 88.00 |
| | Ethanol | 87.90 | 87.90 | 87.90 | | 44.0 | | | | | | | | |
| Acid-modified rosin | Acrylic acid-modified hydrogenated rosin | 12.0 | | | 2.0 | 4.0 | 6.0 | 6.0 | 6.0 | 11.5 | 11.5 | 11.5 | | 11.0 |
| | Acrylic acid-modified rosin | | 6.0 | | 2.0 | 4.0 | | | | | | | | |
| | Maleic acid-modified hydrogenated rosin | | 6.0 | | 2.0 | 4.0 | | | | | | | 4.0 | |
| Rosin | Hydrog en ated rosin | | | 6.0 | 3.0 | | | | | | | | 4.0 | |
| | Polymerized rosin | | | 6.0 | 3.0 | | 6.0 | 6.0 | 6.0 | | | | 4.0 | |
| Organic acid | Succinic acid | | | | | | | | | 0.5 | | | 1.0 | |
| | Adipic acid | | | | | | | | | | 0.5 | | 1.0 | |
| | Suberic acid | | | | | | | | | | | 0.5 | 1.0 | |
| Organic halogen compounds | Chlorendic acid | 0.1 | 0.1 | 0.1 | 0.1 | 0.1 | 0.5 | 1.0 | 3.0 | 0.1 | 0.1 | 0.1 | 0.1 | 1.0 |
| | Chlorendic anhydride | | | | | | | | | | | | | |
| | 1,2,4,5-tetrabromobenzene | | | | | | | | | | | | | |
| Amine hydrohalide salt | Piperidine trifluoroborate complex salt | | | | | | | | | | | | | |
| | Ethylamine·HBr | | | | | | | | | | | | | |
| Amine | Cyclohexylamine | | | | | | | | | | | | | |
| Phosphonic acid ester | 2-ethylhexyl(2-ethylhexyl)phosph onate | | | | | | | | | | | | | |
| Phenyl-substituted phosphinic acid | Phenylphosphinic acid | | | | | | | | | | | | | |
| Matting agent | Palmitic acid | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 |

| Solder alloy | | | | | | | | | | | | | | |
|---|---|---|---|---|---|---|---|---|---|---|---|---|---|---|
| Sn | | Bal. | Bal. | Bal. | Bal. | Bal. | Bal. | Bal. | Bal. | Bal. | Bal. | Bal. | Bal. | Bal. |
| Ag | | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 | 0.008 |
| As | | | | | | | | | | | | | | |
| Wettability rate evaluation | | ○ | ○ | ○ | ○ | ○ | ○ | ○ | ○ | ○ | ○ | ○ | ○ | ○ |

**[Table 6F]**

| Flux material | | Ex. 6F-1 | Ex 6F-2 | Ex 6F-3 | Ex 6F-4 | Ex 6F-5 | Ex 6F-6 | Ex 6F-7 | Ex 6F-8 | Ex 6F-9 | Ex 6F-10 | Ex 6F-11 | Ex 6F-12 |
|---|---|---|---|---|---|---|---|---|---|---|---|---|---|
| Solvent | 2-propanol | 88.00 | 88.00 | 87.50 | 87.50 | 87.50 | 86.50 | 87.50 | 87.50 | 87.50 | 87.50 | 85.60 | |
| | Ethanol | | | | | | | | | | | | 85.60 |
| Acid-modified rosin | Acrylic acid-modified hydrogenated rosin | 11.0 | 9.0 | 11.0 | 11.0 | 11.0 | 9.0 | 11.0 | 11.0 | 10.0 | 10.0 | 3.0 | 3.0 |
| | Acrylic acid-modified rosin | | | | | | | | | | | 3.0 | 3.0 |
| | Maleic acid-modified hydrogenated rosin | | | | | | | | | | | 3.0 | 3.0 |
| Rosin | Hydrogenated rosin | | | | | | | | | | | 1.5 | 1.5 |
| | Polymerized rosin | | | | | | | | | | | 1.5 | 1.5 |
| Organic acid | Succinic acid | | | | | | 3.0 | | | | | 0.5 | 0.5 |
| | Adipic acid | | | | | | | | | | | 0.5 | 0.5 |
| | Suberic acid | | | | | | | | | | | 0.5 | 0.5 |
| Organic halogen compounds | Chlorendic acid | | 1.0 | 0.5 | 0.5 | 0.5 | 0.5 | 0.5 | 0.5 | 0.5 | 0.5 | 0.1 | 0.1 |
| | Chlorendic anhydride | 1.0 | 1.0 | | | | | | | | | 0.1 | 0.1 |
| | 1,2,4,5-tetrabromobenzene | | 1.0 | | | | | | | | | 0.1 | 0.1 |
| Amine hydrohalide salt | Piperidine trifluoroborate complex salt | | | 1.0 | | 0.5 | | | | | | 0.1 | 0.1 |
| | Ethylamine·HBr | | | | 1.0 | 0.5 | | | | | | 0.1 | 0.1 |
| Amine | Cyclohexylamine | | | | | | 1.0 | | | | | 0.1 | 0.1 |
| Phosphonic acid ester | 2-ethylhexyl(2-ethylhexyl)phosph onate | | | | | | | 1.0 | | 1.0 | | 0.1 | 0.1 |
| Phenyl-substituted phosphinic acid | Phenylphosphinic acid | | | | | | | | 1.0 | 1.0 | | 0.1 | 0.1 |
| Matting agent | Palmitic acid | | | | | | | | | | 2.0 | 0.1 | 0.1 |
| Total | | 100. 00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | |
| Sn | | Bal. | Bal. | Bal. | Bal. | Bal. | Bal. | Bal. | Bal. | Bal. | Bal. | Bal. | Bal. |
| Ag | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 |
| As | | | | | | | | | | | | | |
| Wettability rate evaluation | | ○ | ○ | ○ | ○ | ○ | ○ | ○ | ○ | ○ | ○ | ○ | ○ |

Table 1G to Table 6G respectively correspond to Table 1F to Table 6F, except that the solder alloy further contains 0.0020 wt% of As.

**[Table 1G]**

| Flux material | | Ex. 1G-1 | Ex 1G-2 | Com. Ex. 1G-1 | Com. Ex. 1G-2 |
|---|---|---|---|---|---|
| Solvent | 2-propanol | 87.90 | 87.90 | 88.00 | 87.90 |
| | Ethanol | | | | |
| Acid-modified rosin | Acrylic acid-modified hydrogenated rosin | | | | |
| | Acrylic acid-modified rosin | | | | |
| | Maleic acid-modified hydrogenated rosin | | | | |
| Rosin | Hydrogenated rosin | | | | |
| | Polymerized rosin | 12.0 | 12.0 | 12.0 | 12.0 |
| Organic acid | Succinic acid | | | | |
| | Adipic acid | | | | |
| | Suberic acid | | | | |
| Organic halogen compounds | Chlorendic acid | 0.1 | | | |
| | Chlorendic anhydride | | 0.1 | | |
| | 1,2,4,5-tetrabromobenzene | | | | 0.1 |
| Amine hydrohalide salt | Piperidine trifluoroborate complex salt | | | | |
| | Ethylamine·HBr | | | | |
| Amine | Cyclohexylamine | | | | |
| Phosphonic acid ester | 2-ethylhexyl(2-ethylhexyl)phosphonate | | | | |
| Phenyl-substituted phosphinic acid | Phenylphosphinic acid | | | | |
| Matting agent | Palmitic acid | | | | |
| Total | | 100.00 | 100.00 | 100.00 | 100.00 |
| Solder alloy | | | | | |
| Sn | | Bal. | Bal. | Bal. | Bal. |
| Ag | | | | | |
| Cu | | 0.65 | 0.65 | 0.65 | 0.65 |
| Ni | | | | | |
| Ge | | 0.008 | 0.008 | 0.008 | 0.008 |
| As | | 0.0020 | 0.0020 | 0.0020 | 0.0020 |
| Wettability rate evaluation | | ○ | ○ | X | X |

**[Table 2G]**

| Flux material | | Ex 2G-1 | Ex. 2G-2 | Com. Ex. 2G-1 |
|---|---|---|---|---|
| Solvent | 2-propanol | 87.90 | 87.90 | 87.90 |
| | Ethanol | | | |
| Acid-modified rosin | Acrylic acid-modified hydrogenated rosin | | | |
| | Acrylic acid-modified rosin | | | |
| | Maleic acid-modified hydrogenated rosin | | | |
| Rosin | Hydrogenated rosin | | | |
| | Polymerized rosin | 12.0 | 12.0 | 12.0 |
| Organic acid | Succinic acid | | | |
| | Adipic acid | | | |
| | Suberic acid | | | |
| Organic halogen compounds | Chlorendic acid | 0.1 | | |
| | Chlorendic anhydride | | 0.1 | |
| | 1,2,4,5-tetrabromobenzene | | | 0.1 |
| Amine hydrohalide salt | Piperidine trifluoroborate complex salt | | | |
| | Ethylamine·HBr | | | |
| Amine | Cyclohexylamine | | | |
| Phosphonic acid ester | 2-ethylhexyl(2-ethylhexyl)phosphonate | | | |
| Phenyl-substituted phosphinic acid | Phenylphosphinic acid | | | |
| Matting agent | Palmitic acid | | | |
| Total | | 100.00 | 100.00 | 100.00 |
| Solder alloy | | | | |
| Sn | | Bal. | Bal. | Bal. |
| Ag | | | | |
| Cu | | 0.65 | 0.65 | 0.65 |
| Ni | | 0.05 | 0.05 | 0.05 |
| Ge | | 0.008 | 0.008 | 0.008 |
| As | | 0.0020 | 0.0020 | 0.0020 |
| Wettability rate evaluation | | ○ | ○ | X |

**[Table 3G]**

| Flux material | | Com. Ex. 3G-1 | Com. Ex. 3G-2 | Com. Ex. 3G-3 |
|---|---|---|---|---|
| Solvent | 2-propanol | 87.90 | 87.90 | 87.90 |
| | Ethanol | | | |
| Acid-modified rosin | Acrylic acid-modified hydrogenated rosin | | | |
| | Acrylic acid-modified rosin | | | |
| | Maleic acid-modified hydrogenated rosin | | | |
| Rosin | Hydrogenated rosin | | | |
| | Polymerized rosin | 12.0 | 12.0 | 12.0 |
| Organic acid | Succinic acid | | | |
| | Adipic acid | | | |
| | Suberic acid | | | |
| Organic halogen compounds | Chlorendic acid | 0.1 | | |
| | Chlorendic anhydride | | 0.1 | |
| | 1,2,4,5-tetrabromobenzene | | | 0.1 |
| Amine hydrohalide salt | Piperidine trifluoroborate complex salt | | | |
| | Ethylamine·HBr | | | |
| Amine | Cyclohexylamine | | | |
| Phosphonic acid ester | 2-ethylhexyl(2-ethylhexyl)phosphonate | | | |
| Phenyl-substituted phosphinic acid | Phenylphosphinic acid | | | |
| Matting agent | Palmitic acid | | | |
| Total | | 100.00 | 100.00 | 100.00 |
| Solder alloy | | | | |
| Sn | | Bal. | Bal. | Bal. |
| Ag | | | | |
| Cu | | 0.65 | 0.65 | 0.65 |
| Ni | | | | |
| Ge | | | | |
| As | | 0.0020 | 0.0020 | 0.0020 |
| Wettability rate evaluation | | X | X | X |

**[Table 4G]**

| Flux material | | Ex. 4G-1 | Ex 4G-2 | Ex 4G-3 | Ex 4G-4 | Ex 4G-5 | Ex 4G-6 |
|---|---|---|---|---|---|---|---|
| Solvent | 2-propanol | 87.90 | 87.90 | 87.90 | 87.90 | 87.90 | 87.90 |
| | Ethanol | | | | | | |
| Acid-modified rosin | Acrylic acid-modified hydrogenated rosin | | | | | | |
| | Acrylic acid-modified rosin | | | | | | |
| | Maleic acid-modified hydrogenated rosin | | | | | | |
| Rosin | Hydrogenated rosin | | | | | | |
| | Polymerized rosin | 12.0 | 12.0 | 12.0 | 12.0 | 12.0 | 12.0 |
| Organic acid | Succinic acid | | | | | | |
| | Adipic acid | | | | | | |
| | Suberic acid | | | | | | |
| Organic halogen compounds | Chlorendic acid | 0.1 | 0.1 | 0.1 | 0.1 | 0.1 | 0.1 |
| | Chlorendic anhydride | | | | | | |
| | 1,2,4,5-tetrabromobenzene | | | | | | |
| Amine hydrohalide salt | Piperidine trifluoroborate complex salt | | | | | | |
| | Ethylamine·HBr | | | | | | |
| Amine | Cyclohexylamine | | | | | | |
| Phosphonic acid ester | 2-ethylhexyl(2-ethylhexyl) ph osphonate | | | | | | |
| Phenyl-substituted phosphinic acid | Phenylphosphinic acid | | | | | | |
| Matting agent | Palmitic acid | | | | | | |
| Total | | 100.00 | 100.00 | 100.00 | 100.00 | 100.00 | 100.00 |
| Solder alloy | | | | | | | |
| Sn | | Bal. | Bal. | Bal. | Bal. | Bal. | Bal. |
| Ag | | | | | | | |
| Cu | | 0.3 | 0.75 | 0.65 | 0.65 | 0.65 | 0.65 |
| Ni | | 0.05 | 0.05 | 0.01 | 0.1 | 0.05 | 0.05 |
| Ge | | 0.008 | 0.008 | 0.008 | 0.008 | 0.004 | 0.015 |
| As | | 0.0020 | 0.0020 | 0.0020 | 0.0020 | 0.0020 | 0.0020 |
| Wettability rate evaluation | | ○ | ○ | ○ | ○ | ○ | ○ |

**[Table 5G]**

| Flux material | | Ex. 5G-1 | Ex 5G-2 | Ex 5G-3 | Ex 5G-4 | Ex 5G-5 | Ex 5G-6 | Ex 5G-7 | Ex 5G-8 | Ex 5G-9 | Ex 5G-10 | Ex 5G-11 | Ex 5G-12 | Ex 5G-13 |
|---|---|---|---|---|---|---|---|---|---|---|---|---|---|---|
| Solvent | 2-propanol | | | | 87.90 | 43.9 | 87.50 | 87.00 | 85.00 | 87.90 | 87.90 | 87.90 | 84.90 | 88.00 |
| | Ethanol | 87.90 | 87.90 | 87.90 | | 44.0 | | | | | | | | |
| Acid-modified rosin | Acrylic acid-modified hydrogenated rosin | 12.0 | | | 2.0 | 4.0 | 6.0 | 6.0 | 6.0 | 11.5 | 11.5 | 11.5 | | 11.0 |
| | Acrylic acid-modified rosin | | 6.0 | | 2.0 | 4.0 | | | | | | | | |
| | Maleic acid-modified hydrogenated rosin | | 6.0 | | 2.0 | 4.0 | | | | | | | 4.0 | |
| Rosin | Hydrogenated rosin | | | 6.0 | 3.0 | | | | | | | | 4.0 | |
| | Polymerized rosin | | | 6.0 | 3.0 | | 6.0 | 6.0 | 6.0 | | | | 4.0 | |
| Organic acid | Succinic acid | | | | | | | | | 0.5 | | | 1.0 | |
| | Adipic acid | | | | | | | | | | 0.5 | | 1.0 | |
| | Suberic acid | | | | | | | | | | | 0.5 | 1.0 | |
| Organic halogen compounds | Chlorendic acid | 0.1 | 0.1 | 0.1 | 0.1 | 0.1 | 0.5 | 1.0 | 3.0 | 0.1 | 0.1 | 0.1 | 0.1 | 1.0 |
| | Chlorendic anhydride | | | | | | | | | | | | | |
| | 1,2,4,5-tetrabromobenze ne | | | | | | | | | | | | | |
| Amine hydrohalide salt | Piperidine trifluoroborate complex salt | | | | | | | | | | | | | |
| | Ethylamine·HBr | | | | | | | | | | | | | |
| Amine | Cyclohexylamine | | | | | | | | | | | | | |
| Phospho nic acid ester | 2-ethylhexyl(2-ethylhexyl)phosph onate | | | | | | | | | | | | | |
| Phenyl-substituted phosphinic acid | Phenylphosphinic acid | | | | | | | | | | | | | |
| Matting agent | Palmitic acid | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | | |
| Sn | | Bal. | Bal. | Bal. | Bal. | Bal. | Bal. | Bal. | Bal. | Bal. | Bal. | Bal. | Bal. | Bal. |
| Ag | | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 | 0.008 |
| As | | 0.0020 | 0.0020 | 0.0020 | 0.0020 | 0.0020 | 0.0020 | 0.0020 | 0.0020 | 0.0020 | 0.0020 | 0.0020 | 0.0020 | 0.0020 |
| Wettability rate evaluation | | ○ | ○ | ○ | ○ | ○ | ○ | ○ | ○ | ○ | ○ | ○ | ○ | ○ |

**[Table 6G]**

| Flux material | | Ex. 6G-1 | Ex 6G-2 | Ex 6G-3 | Ex 6G-4 | Ex 6G-5 | Ex 6G-6 | Ex 6G-7 | Ex 6G-8 | Ex 6G-9 | Ex 6G-10 | Ex 6G-11 | Ex 6G-12 |
|---|---|---|---|---|---|---|---|---|---|---|---|---|---|
| Solvent | 2-propanol | 88.00 | 88.00 | 87.50 | 87.50 | 87.50 | 86.50 | 87.50 | 87.50 | 87.50 | 87.50 | 85.60 | |
| | Ethanol | | | | | | | | | | | | 85.60 |
| Acid-modified rosin | Acrylic acid-modified hydrogenated rosin | 11.0 | 9.0 | 11.0 | 11.0 | 11.0 | 9.0 | 11.0 | 11.0 | 10.0 | 10.0 | 3.0 | 3.0 |
| | Acrylic acid-modified rosin | | | | | | | | | | | 3.0 | 3.0 |
| | Maleic acid-modified hydrogenated rosin | | | | | | | | | | | 3.0 | 3.0 |
| Rosin | Hydrogenated rosin | | | | | | | | | | | 1.5 | 1.5 |
| | Polymerized rosin | | | | | | | | | | | 1.5 | 1.5 |
| Organic acid | Succinic acid | | | | | | 3.0 | | | | | 0.5 | 0.5 |
| | Adipic acid | | | | | | | | | | | 0.5 | 0.5 |
| | Suberic acid | | | | | | | | | | | 0.5 | 0.5 |
| Organic halogen compounds | Chlorendic acid | | 1.0 | 0.5 | 0.5 | 0.5 | 0.5 | 0.5 | 0.5 | 0.5 | 0.5 | 0.1 | 0.1 |
| | Chlorendic anhydride | 1.0 | 1.0 | | | | | | | | | 0.1 | 0.1 |
| | 1,2,4,5-tetrabromobenzen e | | 1.0 | | | | | | | | | 0.1 | 0.1 |
| Amine hydrohalide salt | Piperidine trifluoroborate complex salt | | | 1.0 | | 0.5 | | | | | | 0.1 | 0.1 |
| | Ethylamine·HBr | | | | 1.0 | 0.5 | | | | | | 0.1 | 0.1 |
| Amine | Cyclohexylamine | | | | | | 1.0 | | | | | 0.1 | 0.1 |
| Phosphonic acid ester | 2-ethylhexyl(2-ethylhexyl)phosph onate | | | | | | | 1.0 | | 1.0 | | 0.1 | 0.1 |
| Phenyl-substituted phosphinic acid | Phenylphosphinic acid | | | | | | | | 1.0 | 1.0 | | 0.1 | 0.1 |
| Matting agent | Palmitic acid | | | | | | | | | | 2.0 | 0.1 | 0.1 |
| Total | | 100.00 | 100.00 | 100.00 | 100.00 | 100.00 | 100.00 | 100.00 | 100.00 | 100.00 | 100.00 | 100.00 | 100.00 |

| Solder alloy | | | | | | | | | | | | | |
|---|---|---|---|---|---|---|---|---|---|---|---|---|---|
| Sn | | Bal. | Bal. | Bal. | Bal. | Bal. | Bal. | Bal. | Bal. | Bal. | Bal. | Bal. | Bal. |
| Ag | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 |
| As | | 0.0020 | 0.0020 | 0.0020 | 0.0020 | 0.0020 | 0.0020 | 0.0020 | 0.0020 | 0.0020 | 0.0020 | 0.0020 | 0.0020 |
| Wettability rate evaluation | | ○ | ○ | ○ | ○ | ○ | ○ | ○ | ○ | ○ | ○ | ○ | ○ |

Table 1H to Table 6H respectively correspond to Table 1F to Table 6F, except that the solder alloy further contains 0.0050 wt% of As.

**[Table 1H]**

| Flux material | | Ex. 1H-1 | Ex. 1H-2 | Com. Ex. 1H-1 | Com. Ex. 1H-2 |
|---|---|---|---|---|---|
| Solvent | 2-propanol | 87.90 | 87.90 | 88.00 | 87.90 |
| | Ethanol | | | | |
| Acid-modified rosin | Acrylic acid-modified hydrogenated rosin | | | | |
| | Acrylic acid-modified rosin | | | | |
| | Maleic acid-modified hydrogenated rosin | | | | |
| Rosin | Hydrogenated rosin | | | | |
| | Polymerized rosin | 12.0 | 12.0 | 12.0 | 12.0 |
| Organic acid | Succinic acid | | | | |
| | Adipic acid | | | | |
| | Suberic acid | | | | |
| Organic halogen compounds | Chlorendic acid | 0.1 | | | |
| | Chlorendic anhydride | | 0.1 | | |
| | 1,2,4,5-tetrabromobenzene | | | | 0.1 |
| Amine hydrohalide salt | Piperidine trifluoroborate complex salt | | | | |
| | Ethylamine·HBr | | | | |
| Amine | Cyclohexylamine | | | | |
| Phosphonic acid ester | 2-ethylhexyl(2-ethylhexyl)phosphonate | | | | |
| Phenyl-substituted phosphinic acid | Phenylphosphinic acid | | | | |
| Matting agent | Palmitic acid | | | | |
| Total | | 100.00 | 100.00 | 100.00 | 100.00 |

| Solder alloy | | | | | |
|---|---|---|---|---|---|
| Sn | | Bal. | Bal. | Bal. | Bal. |
| Ag | | | | | |
| Cu | | 0.65 | 0.65 | 0.65 | 0.65 |
| Ni | | | | | |
| Ge | | 0.008 | 0.008 | 0.008 | 0.008 |
| As | | 0.0050 | 0.0050 | 0.0050 | 0.0050 |
| Wettability rate evaluation | | ○ | ○ | X | X |

**[Table 2H]**

| Flux material | | Ex 2H-1 | Ex. 2H-2 | Com. Ex. 2H-1 |
|---|---|---|---|---|
| Solvent | 2-propanol | 87.90 | 87.90 | 87.90 |
| | Ethanol | | | |
| Acid-modified rosin | Acrylic acid-modified hydrogenated rosin | | | |
| | Acrylic acid-modified rosin | | | |
| | Maleic acid-modified hydrogenated rosin | | | |
| Rosin | Hydrogenated rosin | | | |
| | Polymerized rosin | 12.0 | 12.0 | 12.0 |
| Organic acid | Succinic acid | | | |
| | Adipic acid | | | |
| | Suberic acid | | | |
| Organic halogen compounds | Chlorendic acid | 0.1 | | |
| | Chlorendic anhydride | | 0.1 | |
| | 1,2,4,5-tetrabromobenzene | | | 0.1 |
| Amine hydrohalide salt | Piperidine trifluoroborate complex salt | | | |
| | Ethylamine·HBr | | | |
| Amine | Cyclohexylamine | | | |
| Phosphonic acid ester | 2-ethylhexyl(2-ethylhexyl)phosphonate | | | |
| Phenyl-substituted phosphinic acid | Phenylphosphinic acid | | | |
| Matting agent | Palmitic acid | | | |
| Total | | 100.00 | 100.00 | 100.00 |

| Solder alloy | | | | |
|---|---|---|---|---|
| Sn | | Bal. | Bal. | Bal. |
| Ag | | | | |
| Cu | | 0.65 | 0.65 | 0.65 |
| Ni | | 0.05 | 0.05 | 0.05 |
| Ge | | 0.008 | 0.008 | 0.008 |
| As | | 0.0050 | 0.0050 | 0.0050 |
| Wettability rate evaluation | | ○ | ○ | X |

**[Table 3H]**

| Flux material | | Com. Ex. 3H-1 | Com. Ex. 3H-2 | Com. Ex. 3H-3 |
|---|---|---|---|---|
| Solvent | 2-propanol | 87.90 | 87.90 | 87.90 |
| | Ethanol | | | |
| Acid-modified rosin | Acrylic acid-modified hydrogenated rosin | | | |
| | Acrylic acid-modified rosin | | | |
| | Maleic acid-modified hydrogenated rosin | | | |
| Rosin | Hydrogenated rosin | | | |
| | Polymerized rosin | 12.0 | 12.0 | 12.0 |
| Organic acid | Succinic acid | | | |
| | Adipic acid | | | |
| | Suberic acid | | | |
| Organic halogen compounds | Chlorendic acid | 0.1 | | |
| | Chlorendic anhydride | | 0.1 | |
| | 1,2,4,5-tetrabromobenzene | | | 0.1 |
| Amine hydrohalide salt | Piperidine trifluoroborate complex salt | | | |
| | Ethylamine·HBr | | | |
| Amine | Cyclohexylamine | | | |
| Phosphonic acid ester | 2-ethylhexyl(2-ethylhexyl)phosphonate | | | |
| Phenyl-substituted phosphinic acid | Phenylphosphinic acid | | | |
| Matting agent | Palmitic acid | | | |
| Total | | 100.00 | 100.00 | 100.00 |
| Solder alloy | | | | |
| Sn | | Bal. | Bal. | Bal. |
| Ag | | | | |
| Cu | | 0.65 | 0.65 | 0.65 |
| Ni | | | | |
| Ge | | | | |
| As | | 0.0050 | 0.0050 | 0.0050 |
| Wettability rate evaluation | | X | X | X |

**[Table 4H]**

| Flux material | | Ex. 4H-1 | Ex 4H-2 | Ex 4H-3 | Ex 4H-4 | Ex 4H-5 | Ex 4H-6 |
|---|---|---|---|---|---|---|---|
| Solvent | 2-propanol | 87.90 | 87.90 | 87.90 | 87.90 | 87.90 | 87.90 |
| | Ethanol | | | | | | |
| Acid-modified rosin | Acrylic acid-modified hydrogenated rosin | | | | | | |
| | Acrylic acid-modified rosin | | | | | | |
| | Maleic acid-modified hydrogenated rosin | | | | | | |
| Rosin | Hydrogenated rosin | | | | | | |
| | Polymerized rosin | 12.0 | 12.0 | 12.0 | 12.0 | 12.0 | 12.0 |
| Organic acid | Succinic acid | | | | | | |
| | Adipic acid | | | | | | |
| | Suberic acid | | | | | | |
| Organic halogen compounds | Chlorendic acid | 0.1 | 0.1 | 0.1 | 0.1 | 0.1 | 0.1 |
| | Chlorendic anhydride | | | | | | |
| | 1,2,4,5-tetrabromobenzene | | | | | | |
| Amine hydrohalide salt | Piperidine trifluoroborate complex salt | | | | | | |
| | Ethylamine·HBr | | | | | | |
| Amine | Cyclohexylamine | | | | | | |
| Phosphonic acid ester | 2-ethylhexyl(2-ethylhexyl) ph osphonate | | | | | | |
| Phenyl-substituted phosphinic acid | Phenylphosphinic acid | | | | | | |
| Matting agent | Palmitic acid | | | | | | |
| Total | | 100.00 | 100.00 | 100.00 | 100.00 | 100.00 | 100.00 |
| Solder alloy | | | | | | | |
| Sn | | Bal. | Bal. | Bal. | Bal. | Bal. | Bal. |
| Ag | | | | | | | |
| Cu | | 0.3 | 0.75 | 0.65 | 0.65 | 0.65 | 0.65 |
| Ni | | 0.05 | 0.05 | 0.01 | 0.1 | 0.05 | 0.05 |
| Ge | | 0.008 | 0.008 | 0.008 | 0.008 | 0.004 | 0.015 |
| As | | 0.0050 | 0.0050 | 0.0050 | 0.0050 | 0.0050 | 0.0050 |
| Wettability rate evaluation | | ○ | ○ | ○ | ○ | ○ | ○ |

**[Table 5H]**

| Flux material | | Ex. 5H-1 | Ex 5H-2 | Ex 5H-3 | Ex 5H-4 | Ex 5H-5 | Ex 5H-6 | Ex 5H-7 | Ex 5H-8 | Ex 5H-9 | Ex 5H-10 | Ex 5H-11 | Ex 5H-12 | Ex 5H-13 |
|---|---|---|---|---|---|---|---|---|---|---|---|---|---|---|
| Solvent | 2-propanol | | | | 87.90 | 43.9 | 87.50 | 87.00 | 85.00 | 87.90 | 87.90 | 87.90 | 84.90 | 88.00 |
| | Ethanol | 87.90 | 87.90 | 87.90 | | 44.0 | | | | | | | | |
| Acid-modified rosin | Acrylic acid-modified hydrogenated rosin | 12.0 | | | 2.0 | 4.0 | 6.0 | 6.0 | 6.0 | 11.5 | 11.5 | 11.5 | | 11.0 |
| | Acrylic acid-modified rosin | | 6.0 | | 2.0 | 4.0 | | | | | | | | |
| | Maleic acid-modified hydrogenated rosin | | 6.0 | | 2.0 | 4.0 | | | | | | | 4.0 | |
| Rosin | Hydrog en ated rosin | | | 6.0 | 3.0 | | | | | | | | 4.0 | |
| | Polymerized rosin | | | 6.0 | 3.0 | | 6.0 | 6.0 | 6.0 | | | | 4.0 | |
| Organic acid | Succinic acid | | | | | | | | | 0.5 | | | 1.0 | |
| | Adipic acid | | | | | | | | | | 0.5 | | 1.0 | |
| | Suberic acid | | | | | | | | | | | 0.5 | 1.0 | |
| Organic halogen compounds | Chlorendic acid | 0.1 | 0.1 | 0. | 0.1 | 0.1 | 0.5 | 1.0 | 3.0 | 0.1 | 0.1 | 0.1 | 0.1 | 1.0 |
| | Chlorendic anhydride | | | | | | | | | | | | | |
| | 1,2,4,5-tetrabromobenze ne | | | | | | | | | | | | | |
| Amine hydrohalide salt | Piperidine trifluoroborate complex salt | | | | | | | | | | | | | |
| | Ethylamine·HBr | | | | | | | | | | | | | |
| Amine | Cyclohexylamine | | | | | | | | | | | | | |
| Phosphonic acid ester | 2-ethylhexyl(2-ethylhexyl)phosph onate | | | | | | | | | | | | | |
| Phenyl-substituted phosphinic acid | Phenylphosphinic acid | | | | | | | | | | | | | |
| Matting agent | Palmitic acid | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | | |
| Sn | | Bal. | Bal. | Bal. | Bal. | Bal. | Bal. | Bal. | Bal. | Bal. | Bal. | Bal. | Bal. | Bal. |
| Ag | | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 | 0.008 |
| As | | 0.0050 | 0.0050 | 0.0050 | 0.0050 | 0.0050 | 0.0050 | 0.0050 | 0.0050 | 0.0050 | 0.0050 | 0.0050 | 0.0050 | 0.0050 |
| Wettability rate evaluation | | ○ | ○ | ○ | ○ | ○ | ○ | ○ | ○ | ○ | ○ | ○ | ○ | ○ |

**[Table 6H]**

| Flux material | | Ex. 6H-1 | Ex 6H-2 | Ex 6H-3 | Ex 6H-4 | Ex 6H-5 | Ex 6H-6 | Ex 6H-7 | Ex 6H-8 | Ex 6H-9 | Ex 6H-10 | Ex 6H-11 | Ex 6H-12 |
|---|---|---|---|---|---|---|---|---|---|---|---|---|---|
| Solvent | 2-propanol | 88.00 | 88.00 | 87.50 | 87.50 | 87.50 | 86.50 | 87.50 | 87.50 | 87.50 | 87.50 | 85.60 | |
| | Ethanol | | | | | | | | | | | | 85.60 |
| Acid-modified rosin | Acrylic acid-modified hydrogenated rosin | 11.0 | 9.0 | 11.0 | 11.0 | 11.0 | 9.0 | 11.0 | 11.0 | 10.0 | 10.0 | 3.0 | 3.0 |
| | Acrylic acid-modified rosin | | | | | | | | | | | 3.0 | 3.0 |
| | Maleic acid-modified hydrogenated rosin | | | | | | | | | | | 3.0 | 3.0 |
| Rosin | Hydrogenated rosin | | | | | | | | | | | 1.5 | 1.5 |
| | Polymerized rosin | | | | | | | | | | | 1.5 | 1.5 |
| Organic acid | Succinic acid | | | | | | 3.0 | | | | | 0.5 | 0.5 |
| | Adipic acid | | | | | | | | | | | 0.5 | 0.5 |
| | Suberic acid | | | | | | | | | | | 0.5 | 0.5 |
| Organic halogen compounds | Chlorendic acid | | 1.0 | 0.5 | 0.5 | 0.5 | 0.5 | 0.5 | 0.5 | 0.5 | 0.5 | 0.1 | 0.1 |
| | Chlorendic anhydride | 1.0 | 1.0 | | | | | | | | | 0.1 | 0.1 |
| | 1,2,4,5-tetrabromobenzen e | | 1.0 | | | | | | | | | 0.1 | 0.1 |
| Amine hydrohalide salt | Piperidine trifluoroborate complex salt | | | 1.0 | | 0.5 | | | | | | 0.1 | 0.1 |
| | Ethylamine·HBr | | | | 1.0 | 0.5 | | | | | | 0.1 | 0.1 |
| Amine | Cyclohexylamine | | | | | | 1.0 | | | | | 0.1 | 0.1 |
| Phosphonic acid ester | 2-ethylhexyl(2-ethylhexyl)phosph onate | | | | | | | 1.0 | | 1.0 | | 0.1 | 0.1 |
| Phenyl-substituted phosphinic acid | Phenylphosphinic acid | | | | | | | | 1.0 | 1.0 | | 0.1 | 0.1 |
| Matting agent | Palmitic acid | | | | | | | | | | 2.0 | 0.1 | 0.1 |
| Total | | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | |
| Sn | | Bal. | Bal. | Bal. | Bal. | Bal. | Bal. | Bal. | Bal. | Bal. | Bal. | Bal. | Bal. |
| Ag | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 |
| As | | 0.0050 | 0.0050 | 0.0050 | 0.0050 | 0.0050 | 0.0050 | 0.0050 | 0.0050 | 0.0050 | 0.0050 | 0.0050 | 0.0050 |
| Wettability rate evaluation | | ○ | ○ | ○ | ○ | ○ | ○ | ○ | ○ | ○ | ○ | ○ | ○ |

Table 1l to Table 6l respectively correspond to Table 1F to Table 6F, except that herein the solder alloy further contains 0.0100 wt% of As.

**[Table 1l]**

| Flux material | | Ex. 1l-1 | Ex 1l-2 | Com. Ex. 1l-1 | Com. Ex. 1l-2 |
|---|---|---|---|---|---|
| Solvent | 2-propanol | 87.90 | 87.90 | 88.00 | 87.90 |
| | Ethanol | | | | |
| Acid-modified rosin | Acrylic acid-modified hydrogenated rosin | | | | |
| | Acrylic acid-modified rosin | | | | |
| | Maleic acid-modified hydrogenated rosin | | | | |
| Rosin | Hydrogenated rosin | | | | |
| | Polymerized rosin | 12.0 | 12.0 | 12.0 | 12.0 |
| Organic acid | Succinic acid | | | | |
| | Adipic acid | | | | |
| | Suberic acid | | | | |
| Organic halogen compounds | Chlorendic acid | 0.1 | | | |
| | Chlorendic anhydride | | 0.1 | | |
| | 1,2,4,5-tetrabromobenzene | | | | 0.1 |
| Amine hydrohalide salt | Piperidine trifluoroborate complex salt | | | | |
| | Ethylamine·HBr | | | | |
| Amine | Cyclohexylamine | | | | |
| Phosphonic acid ester | 2-ethylhexyl(2-ethylhexyl)phosphonate | | | | |
| Phenyl-substituted phosphinic acid | Phenylphosphinic acid | | | | |
| Matting agent | Palmitic acid | | | | |
| Total | | 100.00 | 100.00 | 100.00 | 100.00 |
| Solder alloy | | | | | |
| Sn | | Bal. | Bal. | Bal. | Bal. |
| Ag | | | | | |
| Cu | | 0.65 | 0.65 | 0.65 | 0.65 |
| Ni | | | | | |
| Ge | | 0.008 | 0.008 | 0.008 | 0.008 |
| As | | 0.0100 | 0.0100 | 0.0100 | 0.0100 |
| Wettability rate evaluation | | O | O | X | X |

**[Table 2l]**

| Flux material | | Ex. 2l-1 | Ex. 2l-2 | Com. Ex. 21-1 |
|---|---|---|---|---|
| Solvent | 2-propanol | 87.90 | 87.90 | 87.90 |
| | Ethanol | | | |
| Acid-modified rosin | Acrylic acid-modified hydrogenated rosin | | | |
| | Acrylic acid-modified rosin | | | |
| | Maleic acid-modified hydrogenated rosin | | | |
| Rosin | Hydrogenated rosin | | | |
| | Polymerized rosin | 12.0 | 12.0 | 12.0 |
| Organic acid | Succinic acid | | | |
| | Adipic acid | | | |
| | Suberic acid | | | |
| Organic halogen compounds | Chlorendic acid | 0.1 | | |
| | Chlorendic anhydride | | 0.1 | |
| | 1,2,4,5-tetrabromobenzene | | | 0.1 |
| Amine hydrohalide salt | Piperidine trifluoroborate complex salt | | | |
| | Ethylamine·HBr | | | |
| Amine | Cyclohexylamine | | | |
| Phosphonic acid ester | 2-ethylhexyl(2-ethylhexyl)phosphonate | | | |
| Phenyl-substituted phosphinic acid | Phenylphosphinic acid | | | |
| Matting agent | Palmitic acid | | | |
| Total | | 100.00 | 100.00 | 100.00 |
| Solder alloy | | | | |
| Sn | | Bal. | Bal. | Bal. |
| Ag | | | | |
| Cu | | 0.65 | 0.65 | 0.65 |
| Ni | | 0.05 | 0.05 | 0.05 |
| Ge | | 0.008 | 0.008 | 0.008 |
| As | | 0.0100 | 0.0100 | 0.0100 |
| Wettability rate evaluation | | O | O | X |

**[Table 3l]**

| Flux material | | Com. Ex. 3l-1 | Com. Ex. 3l-2 | Com. Ex. 3l-3 |
|---|---|---|---|---|
| Solvent | 2-propanol | 87.90 | 87.90 | 87.90 |
| | Ethanol | | | |
| Acid-modified rosin | Acrylic acid-modified hydrogenated rosin | | | |
| | Acrylic acid-modified rosin | | | |
| | Maleic acid-modified hydrogenated rosin | | | |
| Rosin | Hydrogenated rosin | | | |
| | Polymerized rosin | 12.0 | 12.0 | 12.0 |
| Organic acid | Succinic acid | | | |
| | Adipic acid | | | |
| | Suberic acid | | | |
| Organic halogen compounds | Chlorendic acid | 0.1 | | |
| | Chlorendic anhydride | | 0.1 | |
| | 1,2,4,5-tetrabromobenzene | | | 0.1 |
| Amine hydrohalide salt | Piperidine trifluoroborate complex salt | | | |
| | Ethylamine·HBr | | | |
| Amine | Cyclohexylamine | | | |
| Phosphonic acid ester | 2-ethylhexyl(2-ethylhexyl)phosphonate | | | |
| Phenyl-substituted phosphinic acid | Phenylphosphinic acid | | | |
| Matting agent | Palmitic acid | | | |
| Total | | 100.00 | 100.00 | 100.00 |
| Solder alloy | | | | |
| Sn | | Bal. | Bal. | Bal. |
| Ag | | | | |
| Cu | | 0.65 | 0.65 | 0.65 |
| Ni | | | | |
| Ge | | | | |
| As | | 0.0100 | 0.0100 | 0.0100 |
| Wettability rate evaluation | | X | X | X |

**[Table 41]**

| Flux material | | Ex. 4l-1 | Ex. 4l-2 | Ex. 4l-3 | Ex. 4l-4 | Ex. 4l-5 | Ex. 4l-6 |
|---|---|---|---|---|---|---|---|
| Solvent | 2-propanol | 87.90 | 87.90 | 87.90 | 87.90 | 87.90 | 87.90 |
| | Ethanol | | | | | | |
| Acid-modified rosin | Acrylic acid-modified hydrogenated rosin | | | | | | |
| | Acrylic acid-modified rosin | | | | | | |
| | Maleic acid-modified hydrogenated rosin | | | | | | |
| Rosin | Hydrogenated rosin | | | | | | |
| | Polymerized rosin | 12.0 | 12.0 | 12.0 | 12.0 | 12.0 | 12.0 |
| Organic acid | Succinic acid | | | | | | |
| | Adipic acid | | | | | | |
| | Suberic acid | | | | | | |
| Organic halogen compounds | Chlorendic acid | 0.1 | 0.1 | 0.1 | 0.1 | 0.1 | 0.1 |
| | Chlorendic anhydride | | | | | | |
| | 1,2,4,5-tetrabromobenzene | | | | | | |
| Amine hydrohalide salt | Piperidine trifluoroborate complex salt | | | | | | |
| | Ethylamine·HBr | | | | | | |
| Amine | Cyclohexylamine | | | | | | |
| Phosphonic acid ester | 2-ethylhexyl(2-ethylhexyl) phosphonate | | | | | | |
| Phenyl-substituted phosphinic acid | Phenylphosphinic acid | | | | | | |
| Matting agent | Palmitic acid | | | | | | |
| Total | | 100.00 | 100.00 | 100.00 | 100.00 | 100.00 | 100.00 |
| Solder alloy | | | | | | | |
| Sn | | Bal. | Bal. | Bal. | Bal. | Bal. | Bal. |
| Ag | | | | | | | |
| Cu | | 0.3 | 0.75 | 0.65 | 0.65 | 0.65 | 0.65 |
| Ni | | 0.05 | 0.05 | 0.01 | 0.1 | 0.05 | 0.05 |
| Ge | | 0.008 | 0.008 | 0.008 | 0.008 | 0.004 | 0.015 |
| As | | 0.0100 | 0.0100 | 0.0100 | 0.0100 | 0.0100 | 0.0100 |
| Wettability rate evaluation | | O | O | O | O | O | O |

**[Table 51]**

| Flux material | | Ex. 5l-1 | Ex. 5l-2 | Ex. 5l-3 | Ex. 5l-4 | Ex. 5l-5 | Ex. 5l-6 | Ex. 5l-7 | Ex. 5l-8 | Ex. 5l-9 | Ex. 5l-10 | Ex. 5l-11 | Ex. 5l-12 | Ex. 5l-13 |
|---|---|---|---|---|---|---|---|---|---|---|---|---|---|---|
| Solvent | 2-propanol | | | | 87.90 | 43.9 | 87.50 | 87.00 | 85.00 | 87.90 | 87.90 | 87.90 | 84.90 | 88.00 |
| | Ethanol | 87.90 | 87.90 | 87.90 | | 44.0 | | | | | | | | |
| Acid-modified rosin | Acrylic acid-modified hydrogenated rosin | 12.0 | | | 2.0 | 4.0 | 6.0 | 6.0 | 6.0 | 11.5 | 11.5 | 11.5 | | 11.0 |
| | Acrylic acid-modified rosin | | 6.0 | | 2.0 | 4.0 | | | | | | | | |
| | Maleic acid-modified hydrogenated rosin | | 6.0 | | 2.0 | 4.0 | | | | | | | 4.0 | |
| Rosin | Hydrog en ated rosin | | | 6.0 | 3.0 | | | | | | | | 4.0 | |
| | Polymerized rosin | | | 6.0 | 3.0 | | 6.0 | 6.0 | 6.0 | | | | 4.0 | |
| Organic acid | Succinic acid | | | | | | | | | 0.5 | | | 1.0 | |
| | Adipic acid | | | | | | | | | | 0.5 | | 1.0 | |
| | Suberic acid | | | | | | | | | | | 0.5 | 1.0 | |
| Organic halogen compounds | Chlorendic acid | 0.1 | 0.1 | 0.1 | 0.1 | 0.1 | 0.5 | 1.0 | 3.0 | 0.1 | 0.1 | 0.1 | 0.1 | 1.0 |
| | Chlorendic anhydride | | | | | | | | | | | | | |
| | 1,2,4,5-tetrabromobenze ne | | | | | | | | | | | | | |
| Amine hydrohalide salt | Piperidine trifluoroborate complex salt | | | | | | | | | | | | | |
| | Ethylamine·HBr | | | | | | | | | | | | | |
| Amine | Cyclohexylamine | | | | | | | | | | | | | |
| Phosphonic acid ester | 2-ethylhexyl(2-ethylhexyl)phosph onate | | | | | | | | | | | | | |
| Phenyl-substituted phosphinic acid | Phenylphosphinic acid | | | | | | | | | | | | | |
| Matting agent | Palmitic acid | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | | |
| Sn | | Bal. | Bal. | Bal. | Bal. | Bal. | Bal. | Bal. | Bal. | Bal. | Bal. | Bal. | Bal. | Bal. |
| Ag | | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 | 0.008 |
| As | | 0.0100 | 0.0100 | 0.0100 | 0.0100 | 0.0100 | 0.0100 | 0.0100 | 0.0100 | 0.0100 | 0.0100 | 0.0100 | 0.0100 | 0.0100 |
| Wettability rate evaluation | | O | O | O | O | O | O | O | O | O | O | O | O | O |

**[Table 61]**

| Flux material | | Ex. 6l-1 | Ex. 6l-2 | Ex. 6l-3 | Ex. 6l-4 | Ex. 6l-5 | Ex. 6l-6 | Ex. 6l-7 | Ex. 6l-8 | Ex. 6l-9 | Ex. 6l-10 | Ex. 6l-11 | Ex. 6l-12 |
|---|---|---|---|---|---|---|---|---|---|---|---|---|---|
| Solvent | 2-propanol | 88.00 | 88.00 | 87.50 | 87.50 | 87.50 | 86.50 | 87.50 | 87.50 | 87.50 | 87.50 | 85.60 | |
| | Ethanol | | | | | | | | | | | | 85.60 |
| Acid-modified rosin | Acrylic acid-modified hydrogenated rosin | 11.0 | 9.0 | 11.0 | 11.0 | 11.0 | 9.0 | 11.0 | 11.0 | 10.0 | 10.0 | 3.0 | 3.0 |
| | Acrylic acid-modified rosin | | | | | | | | | | | 3.0 | 3.0 |
| | Maleic acid-modified hydrogenated rosin | | | | | | | | | | | 3.0 | 3.0 |
| Rosin | Hydrogenated rosin | | | | | | | | | | | 1.5 | 1.5 |
| | Polymerized rosin | | | | | | | | | | | 1.5 | 1.5 |
| Organic acid | Succinic acid | | | | | | 3.0 | | | | | 0.5 | 0.5 |
| | Adipic acid | | | | | | | | | | | 0.5 | 0.5 |
| | Suberic acid | | | | | | | | | | | 0.5 | 0.5 |
| Organic halogen compounds | Chlorendic acid | | 1.0 | 0.5 | 0.5 | 0.5 | 0.5 | 0.5 | 0.5 | 0.5 | 0.5 | 0.1 | 0.1 |
| | Chlorendic anhydride | 1.0 | 1.0 | | | | | | | | | 0.1 | 0.1 |
| | 1,2,4,5-tetrabromobenzen e | | 1.0 | | | | | | | | | 0.1 | 0.1 |
| Amine hydrohalide salt | Piperidine trifluoroborate complex salt | | | 1.0 | | 0.5 | | | | | | 0.1 | 0.1 |
| | Ethylamine·HBr | | | | 1.0 | 0.5 | | | | | | 0.1 | 0.1 |
| Amine | Cyclohexylamine | | | | | | 1.0 | | | | | 0.1 | 0.1 |
| Phospho nic acid ester | 2-ethylhexyl(2-ethylhexyl)phosph onate | | | | | | | 1.0 | | 1.0 | | 0.1 | 0.1 |
| Phenyl-substituted phosphinic acid | Phenylphosphinic acid | | | | | | | | 1.0 | 1.0 | | 0.1 | 0.1 |
| Matting agent | Palmitic acid | | | | | | | | | | 2.0 | 0.1 | 0.1 |
| Total | | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | |
| Sn | | Bal. | Bal. | Bal. | Bal. | Bal. | Bal. | Bal. | Bal. | Bal. | Bal. | Bal. | Bal. |
| Ag | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.00 8 | 0.008 | 0.008 |
| As | | 0.0100 | 0.0100 | 0.0100 | 0.0100 | 0.0100 | 0.0100 | 0.0100 | 0.0100 | 0.0100 | 0.0100 | 0.0100 | 0.0100 |
| Wettability rate evaluation | | O | O | O | O | O | O | O | O | O | O | O | O |

Table 1J to Table 6J respectively correspond to Table 1F to Table 6F, except that the solder alloy further contains 0.0150 wt% of As.

**[Table 1J]**

| Flux material | | Ex. 1J-1 | Ex. 1J-2 | Com. Ex. 1J-1 | Com. Ex. 1J-2 |
|---|---|---|---|---|---|
| Solvent | 2-propanol | 87.90 | 87.90 | 88.00 | 87.90 |
| | Ethanol | | | | |
| Acid-modified rosin | Acrylic acid-modified hydrogenated rosin | | | | |
| | Acrylic acid-modified rosin | | | | |
| | Maleic acid-modified hydrogenated rosin | | | | |
| Rosin | Hydrogenated rosin | | | | |
| | Polymerized rosin | 12.0 | 12.0 | 12.0 | 12.0 |
| Organic acid | Succinic acid | | | | |
| | Adipic acid | | | | |
| | Suberic acid | | | | |
| Organic halogen compounds | Chlorendic acid | 0.1 | | | |
| | Chlorendic anhydride | | 0.1 | | |
| | 1,2,4,5-tetrabromobenzene | | | | 0.1 |
| Amine hydrohalide salt | Piperidine trifluoroborate complex salt | | | | |
| | Ethylamine·HBr | | | | |
| Amine | Cyclohexylamine | | | | |
| Phosphonic acid ester | 2-ethylhexyl(2-ethylhexyl)phosphonate | | | | |
| Phenyl-substituted phosphinic acid | Phenylphosphinic acid | | | | |
| Matting agent | Palmitic acid | | | | |
| Total | | 100.00 | 100.00 | 100.00 | 100.00 |
| Solder alloy | | | | | |
| Sn | | Bal. | Bal. | Bal. | Bal. |
| Ag | | | | | |
| Cu | | 0.65 | 0.65 | 0.65 | 0.65 |
| Ni | | | | | |
| Ge | | 0.008 | 0.008 | 0.008 | 0.008 |
| As | | 0.0150 | 0.0150 | 0.0150 | 0.0150 |
| Wettability rate evaluation | | O | O | X | X |

**[Table 2J]**

| Flux material | | Ex. 2J-1 | Ex. 2J-2 | Com. Ex. 2J-1 |
|---|---|---|---|---|
| Solvent | 2-propanol | 87.90 | 87.90 | 87.90 |
| | Ethanol | | | |
| Acid-modified rosin | Acrylic acid-modified hydrogenated rosin | | | |
| | Acrylic acid-modified rosin | | | |
| | Maleic acid-modified hydrogenated rosin | | | |
| Rosin | Hydrogenated rosin | | | |
| | Polymerized rosin | 12.0 | 12.0 | 12.0 |
| Organic acid | Succinic acid | | | |
| | Adipic acid | | | |
| | Suberic acid | | | |
| Organic halogen compounds | Chlorendic acid | 0.1 | | |
| | Chlorendic anhydride | | 0.1 | |
| | 1,2,4,5-tetrabromobenzene | | | 0.1 |
| Amine hydrohalide salt | Piperidine trifluoroborate complex salt | | | |
| | Ethylamine·HBr | | | |
| Amine | Cyclohexylamine | | | |
| Phosphonic acid ester | 2-ethylhexyl(2-ethylhexyl)phosphonate | | | |
| Phenyl-substituted phosphinic acid | Phenylphosphinic acid | | | |
| Matting agent | Palmitic acid | | | |
| Total | | 100.00 | 100.00 | 100.00 |
| Solder alloy | | | | |
| Sn | | Bal. | Bal. | Bal. |
| Ag | | | | |
| Cu | | 0.65 | 0.65 | 0.65 |
| Ni | | 0.05 | 0.05 | 0.05 |
| Ge | | 0.008 | 0.008 | 0.008 |
| As | | 0.0150 | 0.0150 | 0.0150 |
| Wettability rate evaluation | | O | O | X |

**[Table 3J]**

| Flux material | | Com. Ex. 3J-1 | Com. Ex. 3J-2 | Com. Ex. 3J-3 |
|---|---|---|---|---|
| Solvent | 2-propanol | 87.90 | 87.90 | 87.90 |
| | Ethanol | | | |
| Acid-modified rosin | Acrylic acid-modified hydrogenated rosin | | | |
| | Acrylic acid-modified rosin | | | |
| | Maleic acid-modified hydrogenated rosin | | | |
| Rosin | Hydrogenated rosin | | | |
| | Polymerized rosin | 12.0 | 12.0 | 12.0 |
| Organic acid | Succinic acid | | | |
| | Adipic acid | | | |
| | Suberic acid | | | |
| Organic halogen compounds | Chlorendic acid | 0.1 | | |
| | Chlorendic anhydride | | 0.1 | |
| | 1,2,4,5-tetrabromobenzene | | | 0.1 |
| Amine hydrohalide salt | Piperidine trifluoroborate complex salt | | | |
| | Ethylamine·HBr | | | |
| Amine | Cyclohexylamine | | | |
| Phosphonic acid ester | 2-ethylhexyl(2-ethylhexyl)phosphonate | | | |
| Phenyl-substituted phosphinic acid | Phenylphosphinic acid | | | |
| Matting agent | Palmitic acid | | | |
| Total | | 100.00 | 100.00 | 100.00 |
| Solder alloy | | | | |
| Sn | | Bal. | Bal. | Bal. |
| Ag | | | | |
| Cu | | 0.65 | 0.65 | 0.65 |
| Ni | | | | |
| Ge | | | | |
| As | | 0.0150 | 0.0150 | 0.0150 |
| Wettability rate evaluation | | X | X | X |

**[Table 4J]**

| Flux material | | Ex. 4J-1 | Ex. 4J-2 | Ex. 4J-3 | Ex. 4J-4 | Ex. 4J-5 | Ex. 4J-6 |
|---|---|---|---|---|---|---|---|
| Solvent | 2-propanol | 87.90 | 87.90 | 87.90 | 87.90 | 87.90 | 87.90 |
| | Ethanol | | | | | | |
| Acid-modified rosin | Acrylic acid-modified hydrogenated rosin | | | | | | |
| | Acrylic acid-modified rosin | | | | | | |
| | Maleic acid-modified hydrogenated rosin | | | | | | |
| Rosin | Hydrogenated rosin | | | | | | |
| | Polymerized rosin | 12.0 | 12.0 | 12.0 | 12.0 | 12.0 | 12.0 |
| Organic acid | Succinic acid | | | | | | |
| | Adipic acid | | | | | | |
| | Suberic acid | | | | | | |
| Organic halogen compounds | Chlorendic acid | 0.1 | 0.1 | 0.1 | 0.1 | 0.1 | 0.1 |
| | Chlorendic anhydride | | | | | | |
| | 1,2,4,5-tetrabromobenzene | | | | | | |
| Amine hydrohalide salt | Piperidine trifluoroborate complex salt | | | | | | |
| | Ethylamine·HBr | | | | | | |
| Amine | Cyclohexylamine | | | | | | |
| Phosphonic acid ester | 2-ethylhexyl(2-ethylhexyl) ph osphonate | | | | | | |
| Phenyl-substituted phosphinic acid | Phenylphosphinic acid | | | | | | |
| Matting agent | Palmitic acid | | | | | | |
| Total | | 100.00 | 100.00 | 100.00 | 100.00 | 100.00 | 100.00 |
| Solder alloy | | | | | | | |
| Sn | | Bal. | Bal. | Bal. | Bal. | Bal. | Bal. |
| Ag | | | | | | | |
| Cu | | 0.3 | 0.75 | 0.65 | 0.65 | 0.65 | 0.65 |
| Ni | | 0.05 | 0.05 | 0.01 | 0.1 | 0.05 | 0.05 |
| Ge | | 0.008 | 0.008 | 0.008 | 0.008 | 0.004 | 0.015 |
| As | | 0.0150 | 0.0150 | 0.0150 | 0.0150 | 0.0150 | 0.0150 |
| Wettability rate evaluation | | O | O | O | O | O | O |

**[Table 5J]**

| Flux material | | Ex 5J-1 | Ex 5J-2 | Ex 5J-3 | Ex 5J-4 | Ex 5J-5 | Ex 5J-6 | Ex 5J-7 | Ex 5J-8 | Ex 5J-9 | Ex 5J-10 | Ex 5J-11 | Ex 5J-12 | Ex 5J-13 |
|---|---|---|---|---|---|---|---|---|---|---|---|---|---|---|
| Solvent | 2-propanol | | | | 87.90 | 43.9 | 87.50 | 87.00 | 85.00 | 87.90 | 87.90 | 87.90 | 84.90 | 88.00 |
| | Ethanol | 87.90 | 87.90 | 87.90 | | 44.0 | | | | | | | | |
| Acid-modified rosin | Acrylic acid-modified hydrogenated rosin | 12.0 | | | 2.0 | 4.0 | 6.0 | 6.0 | 6.0 | 11.5 | 11.5 | 11.5 | | 11.0 |
| | Acrylic acid-modified rosin | | 6.0 | | 2.0 | 4.0 | | | | | | | | |
| | Maleic acid-modified hydrogenated rosin | | 6.0 | | 2.0 | 4.0 | | | | | | | 4.0 | |
| Rosin | Hydrogenated rosin | | | 6.0 | 3.0 | | | | | | | | 4.0 | |
| | Polymerized rosin | | | 6.0 | 3.0 | | 6.0 | 6.0 | 6.0 | | | | 4.0 | |
| Organic acid | Succinic acid | | | | | | | | | 0.5 | | | 1.0 | |
| | Adipic acid | | | | | | | | | | 0.5 | | 1.0 | |
| | Suberic acid | | | | | | | | | | | 0.5 | 1.0 | |
| Organic halogen compounds | Chlorendic acid | 0.1 | 0.1 | 0.1 | 0.1 | 0.1 | 0.5 | 1.0 | 3.0 | 0.1 | 0.1 | 0.1 | 0.1 | 1.0 |
| | Chlorendic anhydride | | | | | | | | | | | | | |
| | 1,2,4,5-tetrabromobenzene | | | | | | | | | | | | | |
| Amine hydrohalide salt | Piperidine trifluoroborate complex salt | | | | | | | | | | | | | |
| | Ethylamine·HBr | | | | | | | | | | | | | |
| Amine | Cyclohexylamine | | | | | | | | | | | | | |
| Phosphonic acid ester | 2-ethylhexyl(2-ethylhexyl)phospho nate | | | | | | | | | | | | | |
| Phenyl-substituted phosphinic acid | Phenylphosphinic acid | | | | | | | | | | | | | |
| Matting agent | Palmitic acid | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | | |
| Sn | | Bal. | Bal. | Bal. | Bal. | Bal. | Bal. | Bal. | Bal. | Bal. | Bal. | Bal. | Bal. | Bal. |
| Ag | | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 | 0.008 |
| As | | 0.0150 | 0.0150 | 0.0150 | 0.0150 | 0.0150 | 0.0150 | 0.0150 | 0.0150 | 0.0150 | 0.0150 | 0.0150 | 0.0150 | 0.0150 |
| Wettability rate evaluation | | O | O | O | O | O | O | O | O | O | O | O | O | O |

**[Table 6J]**

| Flux material | | Ex. 6J-1 | Ex 6J-2 | Ex 6J-3 | Ex 6J-4 | Ex 6J-5 | Ex 6J-6 | Ex 6J-7 | Ex 6J-8 | Ex 6J-9 | Ex 6J-10 | Ex 6J-11 | Ex 6J-12 |
|---|---|---|---|---|---|---|---|---|---|---|---|---|---|
| Solvent | 2-propanol | 88.0 0 | 88.0 0 | 87.5 0 | 87.5 0 | 87.5 0 | 86.5 0 | 87.5 0 | 87.5 0 | 87.5 0 | 87.5 0 | 85.6 0 | |
| | Ethanol | | | | | | | | | | | | 85.6 0 |
| Acid-modified rosin | Acrylic acid-modified hydrogenated rosin | 11.0 | 9.0 | 11.0 | 11.0 | 11.0 | 9.0 | 11.0 | 11.0 | 10.0 | 10.0 | 3.0 | 3.0 |
| | Acrylic acid-modified rosin | | | | | | | | | | | 3.0 | 3.0 |
| | Maleic acid-modified hydrogenated rosin | | | | | | | | | | | 3.0 | 3.0 |
| Rosin | Hydrogenated rosin | | | | | | | | | | | 1.5 | 1.5 |
| | Polymerized rosin | | | | | | | | | | | 1.5 | 1.5 |
| Organic acid | Succinic acid | | | | | | 3.0 | | | | | 0.5 | 0.5 |
| | Adipic acid | | | | | | | | | | | 0.5 | 0.5 |
| | Suberic acid | | | | | | | | | | | 0.5 | 0.5 |
| Organic halogen compounds | Chlorendic acid | | 1.0 | 0.5 | 0.5 | 0.5 | 0.5 | 0.5 | 0.5 | 0.5 | 0.5 | 0.1 | 0.1 |
| | Chlorendic anhydride | 1.0 | 1.0 | | | | | | | | | 0.1 | 0.1 |
| | 1,2,4,5-tetrabromobenzen e | | 1.0 | | | | | | | | | 0.1 | 0.1 |
| Amine hydrohalide salt | Piperidine trifluoroborate complex salt | | | 1.0 | | 0.5 | | | | | | 0.1 | 0.1 |
| | Ethylamine·HBr | | | | 1.0 | 0.5 | | | | | | 0.1 | 0.1 |
| Amine | Cyclohexylamine | | | | | | 1.0 | | | | | 0.1 | 0.1 |
| Phosphonic acid ester | 2-ethylhexyl(2-ethylhexyl)phosph onate | | | | | | | 1.0 | | 1.0 | | 0.1 | 0.1 |
| Phenyl-substituted phosphinic acid | Phenylphosphinic acid | | | | | | | | 1.0 | 1.0 | | 0.1 | 0.1 |
| Matting agent | Palmitic acid | | | | | | | | | | 2.0 | 0.1 | 0.1 |
| Total | | 100.00 | 100.00 | 100.00 | 100.00 | 100.00 | 100.00 | 100.00 | 100.00 | 100.00 | 100.00 | 100.00 | 100.00 |
| Solder alloy | | | | | | | | | | | | | |
| Sn | | Bal. | Bal. | Bal. | Bal. | Bal. | Bal. | Bal. | Bal. | Bal. | Bal. | Bal. | Bal. |
| Aq | | | | | | | | | | | | | |
| Cu | | 0.65 | 0.65 | 0.65 | 0.65 | 0.65 | 0.65 | 0.65 | 0.65 | 0.65 | 0.65 | 0.65 | 0.65 |
| Ni | | 0.05 | 0.05 | 0.05 | 0.05 | 0.05 | 0.05 | 0.05 | 0.05 | 0.05 | 0.05 | 0.05 | 0.05 |
| Ge | | 0.008 | 0.008 | 0.008 | 0.008 | 0.008 | 0.008 | 0.008 | 0.008 | 0.008 | 0.008 | 0.008 | 0.008 |
| As | | 0.0150 | 0.0150 | 0.0150 | 0.0150 | 0.0150 | 0.0150 | 0.0150 | 0.0150 | 0.0150 | 0.0150 | 0.0150 | 0.0150 |
| Wettability rate evaluation | | O | O | O | O | O | O | O | O | O | O | O | O |

### <Pallet solderability>

An evaluation substrate (evaluation substrate H12-06, by Senju Metal Industry Co., Ltd.; size: 100 mm × 120 mm, thickness: 1.6 mm, soldering points: 272 points) was attached to a pallet mask having openings provided therein at sites where soldering was to be carried out. Pallet soldering could be performed thereafter through soldering of the evaluation substrate attached to the pallet mask, under the soldering conditions below.

### (Soldering conditions)

Soldering apparatus: "SPF-300" by Senju Metal Industry Co., Ltd.

Flux applying apparatus: Spray fluxer ("SSF-300" by Senju Metal Industry Co., Ltd.)
Flux application amount: 70 mL/m²
Conveyor speed: 1 m/min
Pre-heating temperature: 100°C
Solder bath temperature: 260°C

## Claims

1. A flux comprising an acid-modified rosin or chlorendic acid and/or chlorendic anhydride, and for soldering a solder alloy that contains 0.1 to 3.0 wt% of Cu and 0.0040 to 0.0150 wt% of Ge, with a balance being made up of Sn,
wherein a content of the acid-modified rosin is 3 to 30 wt% based on the flux.

2. The flux according to claim 1, wherein the acid-modified rosin is selected from the group consisting of acrylic acid-modified rosin, acrylic acid-modified hydrogenated rosin, maleic acid-modified rosin and maleic acid-modified hydrogenated rosin.

3. The flux according to claim 1 or 2, wherein the solder alloy further contains 0.0100 to 0.1000 wt% of Ni.

4. The flux according to any one of claims 1 to 3, wherein the solder alloy further contains 0.0020 to 0.0150 wt% of As.

5. The flux according to any one of claims 1 to 4, wherein the soldering is flow soldering.

6. The flux according to any one of claims 1 to 5, wherein the soldering is pallet soldering.

7. A solder alloy comprising 0.1 to 3.0 wt% of Cu and 0.0040 to 0.0150 wt% of Ge, with a balance being made up of Sn, and for being soldered to a surface of a substrate, the surface being treated with a flux that contains an acid-modified rosin or chlorendic acid and/or chlorendic anhydride,
wherein a content of the acid-modified rosin is 3 to 30 wt% based on the flux.

8. The solder alloy according to claim 7, wherein the acid-modified rosin is selected from the group consisting of acrylic acid-modified rosin, acrylic acid-modified hydrogenated rosin, maleic acid-modified rosin and maleic acid-modified hydrogenated rosin.

9. The solder alloy according to claim 7 or 8, wherein the solder alloy further contains 0.0100 to 0.1000 wt% of Ni.

10. The solder alloy according to any one of claims 7 to 9, wherein the solder alloy further contains 0.0020 to 0.0150 wt% of As.

11. The solder alloy according to any one of claims 7 to 10, wherein the soldering is flow soldering.

12. The solder alloy according to any one of claims 7 to 11, wherein the soldering is pallet soldering.

13. A method for producing a joined body, the method comprising a step of soldering a solder alloy that contains 0.1 to 3.0 wt% of Cu and 0.0040 to 0.0150 wt% of Ge, with a balance being made up of Sn, to a surface of a substrate, the surface being treated with a flux that contains an acid-modified rosin or chlorendic acid and/or chlorendic anhydride, to form a joined body,
wherein a content of the acid-modified rosin is 3 to 30 wt% based on the flux.

14. The production method according to claim 13, wherein the acid-modified rosin is selected from the group consisting of acrylic acid-modified rosin, acrylic acid-modified hydrogenated rosin, maleic acid-modified rosin and maleic acid-modified hydrogenated rosin.

15. The production method according to claim 13 or 14, wherein the solder alloy further contains 0.0100 to 0.1000 wt% of Ni.

16. The production method according to any one of claims 13 to 15, wherein the solder alloy further contains 0.0020 to 0.0150 wt% of As.

17. The production method according to any one of claims 13 to 16, wherein the soldering is flow soldering.

18. The production method according to any one of claims 13 to 17, wherein the soldering is pallet soldering.

19. A joined body obtained by the production method of any one of claims 13 to 18.
